# EUROPÄISCHE PATENTANMELDUNG

(11) **EP 0 533 993 A1**
(43) Veröffentlichungstag der Anmeldung: **31.03.1993**
(21) Anmeldenummer: 91116592.6
(22) Anmeldetag: 27.09.1991
(51) Int. Cl.: G06F 13/24, G06F 15/16

(54) **Unterbrechungssteuerung zur Behandlung von Unterbrechungsanforderungen bei Ein-/Ausgabeoperationen in einem Prozessorsystem und darauf beruhendes Verfahren bei der Rekonfiguration des Prozessorsystems**

(71) Anmelder: Siemens Nixdorf Informationssysteme Aktiengesellschaft, D-33102 Paderborn (DE)
(72) Erfinder: Brandt, Ulrich, Dipl.-Ing., W-8000 München 80 (DE); Kropsch, Norbert, Dipl.-Ing., W-8000 München 19 (DE)
(74) Vertreter: Fuchs, Franz-Josef, Dr.-Ing.

(57) **Zusammenfassung**

Die Unterbrechungssteuerung ist aus einzelnen Steuermodulen (STM) aufgebaut, die über unidirektional arbeitende Verbindungsleitungen (LK) in Reihe oder zu einer Ringverbindung zusammengeschaltet sind. An jedes Steuermodul können ein oder mehrere verschiedene Prozessoren (CPU, IOS, GSA) angeschlossen sein, und jedes Steuermodul weist wenigstens ein Unterbrechungsanforderungsregister (IFR) auf, in das alle lokal entstehenden Unterbrechungsanforderungen der angeschlossenen Prozessoren (IOS, GSA) eingetragen werden. Die in die Unterbrechungsanforderungsregister (IFR) eingetragenen Unterbrechungsanforderungen werden jeweils über die abgehende Verbindungsleitung (LK) zum Unterbrechungsanforderungsregister des nachfolgenden Steuermoduls weitergeleitet, bis das für den als Empfänger bestimmten Verarbeitungsprozessor (CPU) zuständige Steuermodul (STM...) erreicht ist. Mehrere bidirektionale Verbindungsleitungen (LK) an jedem Schnittstellensteuermodul zu anderen Modulen ermöglichen die Herstellung alternativer Ringverbindungen und Rekonfigurationen im Störungsfall. Anwendbar bei realen und virtuellen Maschinensystemen.

## Beschreibung

Die Erfindung betrifft eine Unterbrechungssteuerung zur Behandlung von Unterbrechungsanforderungen im Rahmen von Ein-/Ausgabeoperationen in Prozessorsystemen mit wenigstens einem Verarbeitungsprozessor und wenigstens einem Ein-/Ausgabeprozessor unter Verwendung von wenigstens einem Unterbrechungsanforderungsregister zur Zwischenspeicherung der von den Ein-/Ausgabeprozessoren abgegebenen Unterbrechungsanforderungen bis zur Weiterleitung an den zuständigen Verarbeitungsprozessor.

Unterbrechungsanforderungen von Ein-/Ausgabeprozessoren werden in der Regel am Ende einer Ein-/Ausgabeoperation oder bei Auftreten von Fehlern ausgelöst, um den zuständigen Verarbeitungsprozessor darüber zu informieren und diesen zu weiteren Operationen zu veranlassen. Den verschiedenen Unterbrechungsanforderungen werden dabei unterschiedliche Unterbrechungsklassen zugeordnet, die gleichzeitig unterschiedlichen Prioritäten entsprechen.

Bei bekannten Prozessorsystemen sind allgemein acht verschiedene Unterbrechungsklassen vorgesehen, wobei der jeweilige Verarbeitungsprozessor durch eine ladbare Maske steuern kann, ob eine Unterbrechungsanforderung einer vorgegebenen Unterbrechungsklasse augenblicklich zugestellt werden kann oder nicht.

Analoges gilt für virtuelle Maschinensysteme, bei denen auf einem in Hardware existierenden reellen Prozessorsystem ein Betrieb mit verschiedenen Betriebssystemen möglich ist. Näheres ist dazu beispielsweise der europäischen Patentanmeldung EP-O 419 723-Al zu entnehmen.

Eine Realisierung derartiger Unterbrechungssteuerungen ist auf zweierlei Art üblich. Im einen Falle verwendet man ein zentrales Unterbrechungsanforderungsregister, an das alle Unterbrechungsanforderungen von den Ein-/Ausgabeprozessoren gemeldet werden, die dann nacheinander dem Verarbeitungsprozessor zugestellt werden, wenn dieser annahmebereit ist. Dieses Prinzip kommt in der Regel bei Monoprozessorsystemen zur Anwendung.

Bei Multiprozessorsystemen mit mehreren Verarbeitungsprozessoren vervielfacht sich der Verkehr zwischen dem zentralen Unterbrechungsanforderungsregister und den einzelnen Prozessoren, so daß man sehr schnell an eine Leistungsgrenze stößt. Außerdem besteht keine Redundanz.

Letztere kann man jedoch erreichen, indem jedem Verarbeitungsprozessor ein individuelles Unterbrechungsanforderungsregister zugeordnet wird, wobei eine zentrale Steuerung Anforderungen der Ein-/Ausgabeprozessoren entgegennimmt und in alle individuellen Unterbrechungsanforderungsregister einträgt. Ebenso werden von dieser Steuerung Änderungen in den individuellen Unterbrechungsanforderungsregistern infolge Zustellung an den angeschlossenen Verarbeitungsprozessor überwacht und die übrigen Unterbrechungsanforderungsregister entsprechend angepaßt, so daß alle Unterbrechungsanforderungsregister immer denselben Inhalt aufweisen. Auch in diesem Falle stößt man wegen des zentralen Steuerungsteiles sehr schnell an eine Leistungsgrenze.

Hinzu kommt in beiden Fällen, daß eine Erweiterung des Prozessorsystems erhebliche Schwierigkeiten bereitet, insbesondere beim Übergang zu mehrere Monoprozessorsysteme umfassenden Multiprozessorsystemen, weil einerseits erhebliche Vorleistungen für den zentralen Steuerungsteil mit Bezug auf einen vorgegebenen möglichen Endausbau erbracht werden müssen, andererseits aber wegen des zentralen Steuerungsteiles die Verarbeitungsleistung begrenzt ist und nicht mit der Anzahl der Prozessoren gesteigert werden kann.

Aufgabe der Erfindung ist es daher, eine Unterbrechungssteuerung zu schaffen, die den jeweiligen Systemstrukturen eines Prozessorsystems leicht angepaßt werden kann, ohne daß unnötige Vorleistungen zu erbringen sind und ohne daß Leistungseinbußen damit verbunden sind.

Diese Aufgabe wird gemäß den kennzeichnenden Merkmalen des Patentanspruches 1 gelöst. Danach besteht die neue Unterbrechungssteuerung aus einer Reihe von Steuermodulen mit je einem Unterbrechungsanforderungsregister, und die in einem Unterbrechungsanforderungsregister eingetragenen Unterbrechungsanforderungen werden fortlaufend jeweils zum Unterbrechungsanforderungsregister des in der Kette folgenden Steuermoduls weitergeleitet, bis das für den Verarbeitungsprozessor zuständige Steuermodul erreicht ist. Dort werden sie dann dem angeschlossenen Verarbeitungsprozessor zugestellt, wenn dieser annahmebereit ist. Alle Steuermodule können dabei unabhängig voneinander Unterbrechungsanforderungen entgegennehmen und in das lokale Unterbrechungsanforderungsregister eintragen, sowie aus diesem entnommene Unterbrechungsanforderungen weiterleiten. Ein leistungsbeschränkender zentraler Steuerungsteil entfällt dadurch und die Verarbeitungsleistung wächst linear mit der Anzahl der Steuermodule und damit mit der Anzahl der Prozessoren, wobei der Aufwand für die einzelnen Steuermodule vergleichsweise gering ist, insbesondere für die Steuermodule mit einem angeschlossenen Ein-/Ausgabeprozessor.

Bei einer offenen Kettenschaltung für die Steuermodule müssen die mit angeschlossenem Verarbeitungsprozessor am Ende der Kette angeordnet sein, damit die Steuermodule mit angeschlossenem Ein-/Ausgabeprozessor ein Steuermodul mit angeschlossenem Verarbeitungsprozessor erreichen können.

Zweckmäßig ist es dagegen, wenn die Steuermodule zu einer unidirektional arbeitenden Ringschaltung zusammengeschaltet werden und daher die Steuermodule mit den angeschlossenen Verarbeitungsprozessoren an beliebiger Stelle der Ringverbindung angeordnet werden können.

Sind zudem die Steuermodule alle gleichartig ausgebildet, besteht ein zusätzlicher Freiheitsgrad darin, daß jeder Verarbeitungsprozessor an jedes Steuermodul angeschlossen werden kann.

Diese zuletzt genannte Voraussetzung ist zwangsläufig erfüllt, wenn an jedem Steuermodul mehrere Prozessorschnittstellensteuerungen für den Anschluß jeweils aller Prozessoren eines Monoprozessorsystems vorgesehen werden. Mit derartigen Steuermodulen lassen sich in gleich einfacher und vorteilhafter Weise auch einheitliche Unterbrechungssteuerungen für aus mehreren Monoprozessorsystemen modulartig aufgebaute Multiprozessorsysteme bilden, die auch als virtuelles Maschinensystem arbeiten können.

Damit bei einem Monoprozessorsystem mit mehreren Prozessoren bzw. einem Multiprozessorsystem mit mehreren Monoprozessorsystemen der Ausfall einer Verbindungsleitung oder eines Prozessors bzw. eines Monoprozessorsystems ohne Auswirkungen bleibt, werden die einzelnen Steuermodule über bidirektionale Verbindungsleitungen mit mehreren anderen Steuermodulen der Unterbrechungssteuerung verbunden und die Verbindungsleitungen so angeordnet, daß im Störungsfall auf eine mögliche andere Ringverbindung umgeschaltet werden kann.

Ein besonderer Vorteil ergibt sich daraus, daß sich bei einer Unterbrechungssteuerung gemäß der Erfindung mit Mehrfachverbindungen zwischen den einzelnen Steuermodulen auch während des laufenden Betriebes eines Prozessorsystems Rekonfigurationen durch Herausnahme von Steuermodulen vornehmen lassen. Die Erfindung betrifft gemäß Patentanspruch 24 auch ein diesbezügliches Verfahren.

Andere Weiterbildungen der Erfindung ergeben sich aus den Unteransprüchen 5 bis 23. Diese beziehen sich unter anderem
- auf die Steuerung für die Herstellung einer Ringverbindung,
- auf die Gestaltung der Steuermodule entsprechend den verschiedenen Einsatzfällen,
- auf die unterschiedliche Behandlung der Anforderungen und auf die Kombination mit einem zusätzlichen Meldeverkehr zwischen den einzelnen Prozessoren und
- auf die Steuerung des Arbeitsablaufes in der Unterbrechungssteuerung.

Einzelheiten der Erfindung seien nachfolgend anhand von in der Zeichnung dargestellten Ausführungsbeispielen näher erläutert. Im einzelnen zeigen
- FIG 1: ein Monoprozessorsystem mit einer Unterbrechungssteuerung gemäß der Erfindung,
- FIG 2: ein Multiprozessorsystem mit einer Unterbrechungssteuerung gemäß der Erfindung,
- FIG 3A bis FIG 3E: Beispiele für die Anordnung der bidirektionalen Verbindungsleitungen zwischen den einzelnen Steuermodulen einer Unterbrechungssteuerung bei unterschiedlichen Konfigurationen von Prozessoren oder Monoprozessorsystemen,
- FIG 4A bis FIG 4D: Beispiele für alternative Ringverbindungen in einem Oktosystem mit vier bidirektionalen Verbindungsleitungen an jedem Steuermodul,
- FIG 5: ein schematisches Strukturschaltbild eines der Steuermodule der Unterbrechungssteuerung,
- FIG 6: ein Strukturschaltbild des ankommenden Teiles der Prozessorschnittstellensteuerungen in einem Steuermodul,
- FIG 7: eine Zusammenstellung der Daten für die verschiedenen Unterbrechungsanforderungen an den Prozessorschnittstellen der Steuermodule und deren Bedeutung,
- FIG 8: ein Strukturschaltbild der Verwaltungssteuerung für das Unterbrechungsanforderungsregister in der Unterbrechungssteuerschaltung eines Steuermoduls der Unterbrechungssteuerung für ein Monoprozessorsystem,
- FIG 9: ein Strukturschaltbild der zugehörigen Weiterleitungssteuerung für die im Unterbrechungsanforderungsregister von FIG 8 zwischengespeicherten Unterbrechungsanforderungen,
- FIG 10: ein Übersichtsschaltbild der Unterbrechungssteuerschaltung in den Steuermodulen der Unterbrechungssteuerung für ein virtuelles Maschinensystem,
- FIG 11: ein Strukturschaltbild der Verwaltungssteuerung für die Unterbrechungsanforderungsregister in der Unterbrechungssteuerschaltung von FIG 10,
- FIG 12: ein Strukturschaltbild der Weiterleitungssteuerung für die in den Unterbrechungsanforderungsregistern von FIG 11 zwischengespeicherten Unterbrechungsanforderungen,
- FIG 13: ein Strukturschaltbild der Steuerschaltung für die Entgegennahme von Anforderungen für globale Unterbrechungsmarkierungen für die Weiterleitungssteuerung von FIG 12,
- FIG 14: ein Ablaufdiagramm für die Verwaltungs- und Weiterleitungssteuerung von FIG 11 und FIG 12,
- FIG 15: ein Übersichtsschaltbild eines Steuermoduls mit zeitlich aufgeteilter Behandlung von Unterbrechungs- und globalen Markierungsanforderungen,
- FIG 16: ein zugehöriges Ablaufdiagramm,
- FIG 17: ein Strukturschaltbild der Steuerschaltung für globale Markierungsanforderungen von FIG 13 mit zusätzlichem Meldeverkehr,
- FIG 18: ein Strukturschaltbild für die Überwachung von globalen Markierungs- und sonstigen Broad-Casting-Anforderungen,
- FIG 19: eine Zusammenstellung der Signaladern der unidirektional arbeitenden Verbindungsleitungen zwischen den Steuermodulen und deren Belegung für die Übertragungen von Unterbrechungsanforderungen und sonstigen Meldungen,
- FIG 20: ein Strukturschaltbild einer Unterbrechungssteuerung mit synchroner Arbeitsweise in den einzelnen Steuermodulen und
- FIG 21: vier Systemstrukturschaltbilder zur Erläuterung einer Systemrekonfiguration bei laufendem Betrieb.

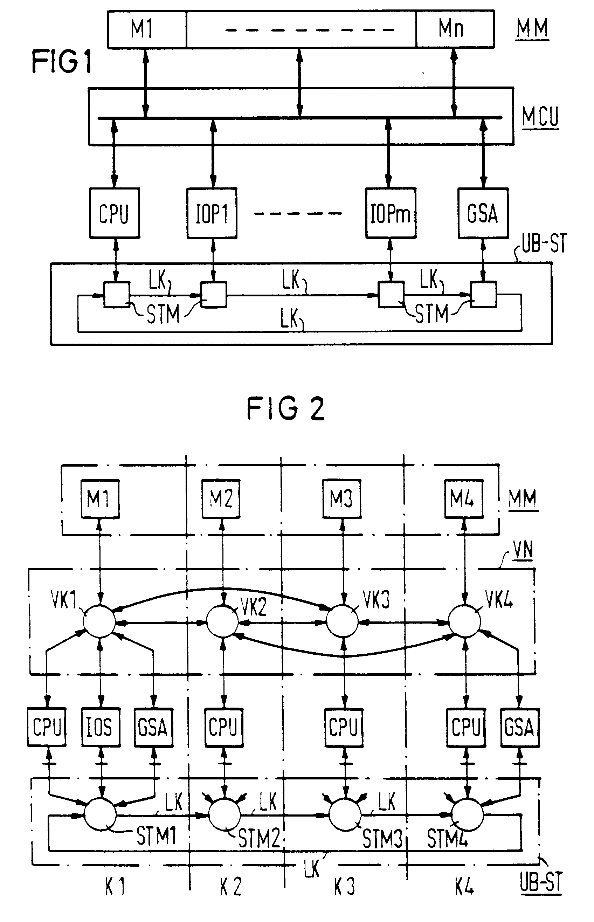

FIG 1 zeigt das Strukturbild eines Monoprozessorsystems mit einem Verarbeitungsprozessor CPU und mehreren Ein-/Ausgabeprozessoren IOS und GSA, die über eine Speichersteuereinheit MCU auf die einzelnen Speichereinheiten M1 bis Mn eines gemeinsamen Speichers MM zugreifen können. Alle Prozessoren sind außerdem über eine Schnittstellensteuerung mit je einem Steuermodul STM einer Unterbrechungssteuerung UB-ST verbunden. Alle Steuermodule STM sind über unidirektional arbeitende Verbindungsleitungen LK in Reihe geschaltet, wobei eine geschlossene Ringschaltung - wie gezeigt - vorteilhaft ist, da dann die Lage des Steuermoduls für den oder die Verarbeitungsprozessoren im Falle eines Multiprozessorsystems beliebig sein kann. FIG 2 zeigt weiterhin ein aus vier Monoprozessorsystemen (K1 bis K4) modulartig aufgebautes Multiprozessorsystem mit einer Unterbrechungssteuerung UB-ST, die in gleicher Weise wie die von FIG 1 modulartig aus einzelnen Steuermodulen STM1 bis STM4 aufgebaut ist, die wiederum über Verbindungsleitungen LK zu einer unidirektional arbeitenden Ringverbindung zusammengeschaltet sind. An jedes Steuermodul STM... sind jeweils alle Prozessoren, z.B. CPU, IOS und GSA, des jeweiligen Monoprozessorsystems, z.B. K1, angeschlossen. Außerdem ist die Speichersteuereinheit für den Zugriff der einzelnen Prozessoren zu den Speichereinheiten M... eines beispielsweise gemeinsamen Speichers MM als Vermittlungsnetzwerk VN mit dem Verbindungsknoten VK1 bis VK4 ausgebildet.

Unabhängig von der Struktur des Prozessorsystems, ob Monoprozessorsystem oder Multiprozessorsystem, läßt sich die gleiche Struktur für die Unterbrechungssteuerung UB-ST verwenden. Diese neue Struktur besteht aus einer Reihe von gleichartigen, in einer unidirektional arbeitenden Serien- bzw. Ringverbindung zusammengeschalteten Steuermodulen STM..., deren Anzahl sich allein nach der Anzahl der Prozessoren oder nach der Anzahl der Monoprozessorsysteme richtet. Lediglich die Anzahl der Prozessoranschlüsse an jedem Steuermodul STM... unterscheidet sich abhängig von der Struktur des jeweiligen Prozessorsystems. Da aber in einem aus Monoprozessorsystemen modulartig zusammengesetzten Multiprozessorsystem die Anzahl der Prozessoren in jedem Monoprozessorsystem in der Regel beschränkt ist, z.B. auf drei verschiedene Prozessortypen, nämlich einen Verarbeitungsprozessor GPU, einen Ein-/Ausgabeprozessor IOS und einen Prozessor GSA bei Multiprozessorsystemen mit einem globalen Speicher, ist die Vorleistung bei einer derartigen Struktur auch bei unterschiedlicher Belegung der Steuermodule mit Prozessoren äußerst gering.

Ein andere Form der Vorleistung bezieht sich auf die Anzahl der an jedem Steuermodul STM... vorzusehenden Verbindungsleitungen zu mehreren anderen Steuermodulen. Für den Aufbau einer unidirektionalen Ringverbindung werden zwar nur jeweils eine ankommende und eine abgehende Verbindungsleitung LK... benötigt. Es ist aber offensichtlich, daß beim Ausfall nur einer dieser Verbindungsleitungen die Ringverbindung unterbrochen und damit die Unterbrechungssteuerung UB-ST nicht mehr arbeitsfähig ist.

FIG 3A bis FIG 3E zeigen eine Reihe von Verbindungskonfigurationen für aus zwei bis acht Steuermodulen bestehenden Anordnungen. Jeder Kreis K0 bis K7 kennzeichnet ein Steuermodul einer Unterbrechungssteuerung. Die Verbindungen zwischen den Kreisen stellen bidirektionale Verbindungsleitungen dar, die ankommend und/oder abgehend betrieben werden können.

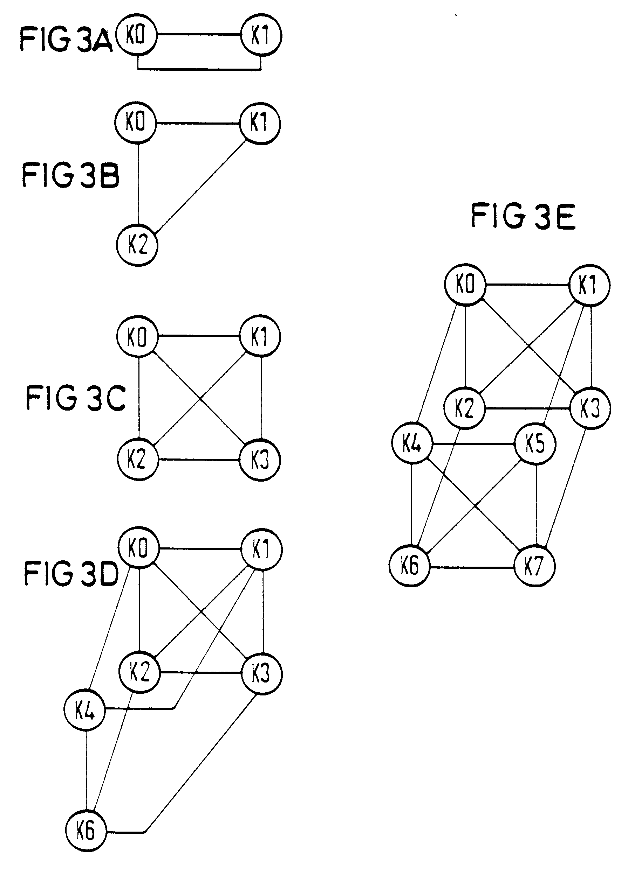

Mit zwei Verbindungsleitungen an jedem Steuermodul läßt sich eine Zweierkombination gemäß FIG 3A mit Leitungsredundanz oder eine Dreierkombination gemäß FIG 3B ohne Leitungsredundanz bilden. Die Viererkombination gemäß FIG 3C erfordert jeweils drei Verbindungsleitungen, mit denen sich auch eine redundante Dreierkombination bilden ließe. Eine Sechser- oder Achterkombination gemäß FIG 3D bzw. FIG 3E erfordert dagegen Steuermodule mit vier angeschlossenen Verbindungsleitungen.

Bezogen auf einen maximal vorgegebenen Endausbau ist also je Steuermodul eine gewisse Vorleistung zu erbringen, die aber im Vergleich zum übrigen System, insbesondere wenn bei einem Multiprozessorsystem ein komplettes Monoprozessorsystem von einem Steuermodul bedient wird, nicht so ins Gewicht fällt, andererseits aber die Betriebssicherheit erheblich steigert, da alternative Ringverbindungen aufgebaut werden können oder bei ausgefallenen Prozessoren oder Monoprozessorsystemen die Ringverbindung unter Umgehung des zugehörigen Steuermoduls rekonfiguriert werden kann.

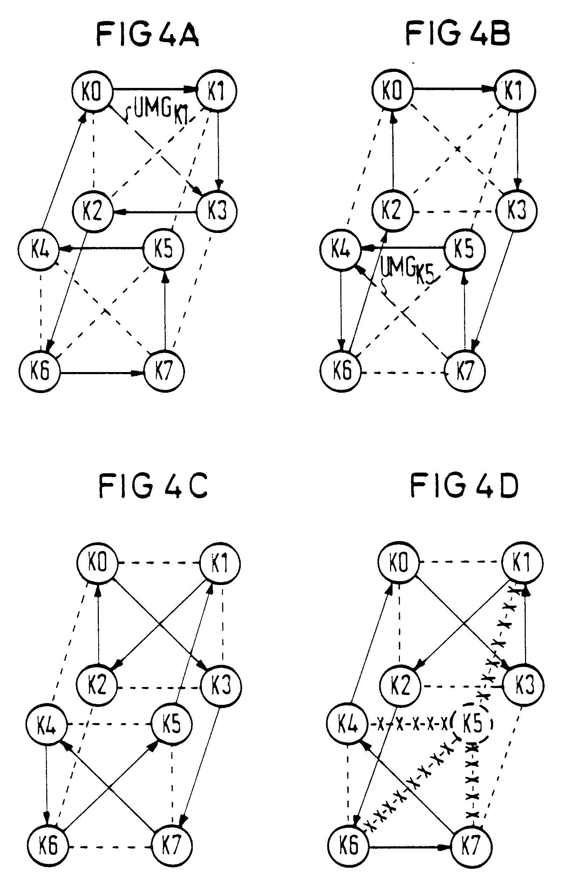

FIG 4A bis FIG 4C zeigen bezogen auf eine Achterkombination gemäß FIG 3E alternative Ringverbindungen, die durch ausgezogene gerichtete Verbindungslinien zwischen den Kreisen K0 bis K7 dargestellt sind. Die gestrichelten Diagonalleitungen UMG_{K1} bzw. UMG_{K5} in FIG 4A bzw. FIG 4B deuten die Rekonfigurationen der Ringverbindung nach Ausfall des K1 bzw. K5 entsprechenden Steuermoduls an, während die gepunkteten Verbindungslinien nicht benutzte Verbindungsleitungen darstellen. Die Gegenüberstellung von FIG 4A und FIG 4B läßt außerdem erkennen, wie Leitungsausfälle in einer bestehenden Ringverbindung durch alternative Ringverbindungen ohne Auswirkung bleiben. So können z.B. folgende Verbindungsleitungen K2 → K3, K6 → K7, K4 → K0 in der Ringverbindung von FIG 4A gleichzeitig ausfallen, ohne daß die Arbeitsfähigkeit beeinträchtigt wird, wenn auf die alternative Ringverbindung gemäß FIG 4B umgeschaltet wird.

Eine weitere, die Diagonalverbindungen einbeziehende Alternative zeigt FIG 4C, während FIG 4D dazu die rekonfigurierte Ringverbindung nach Ausfall des Prozessors oder Prozessorsystems von K5 zeigt, wobei die nicht benutzbaren Verbindungsleitungen an K5 zusätzlich durch Kreuzchen gekennzeichnet sind.

Diese wenigen Beispiele zeigen bereits, wie mit einer beschränkten Anzahl von Verbindungsleitungen an jedem Steuermodul vielfältige Möglichkeiten zur Gestaltung einer Ringverbindung geschaffen werden können. Außerdem besteht mit Bezug auf größere Multiprozessorsysteme die Möglichkeit, größere Netzwerke in redundante Duplexsysteme aufzuspalten, z.B. ein Achtersystem gemäß FIG 3E in zwei Vierersysteme gemäß FIG 3C.

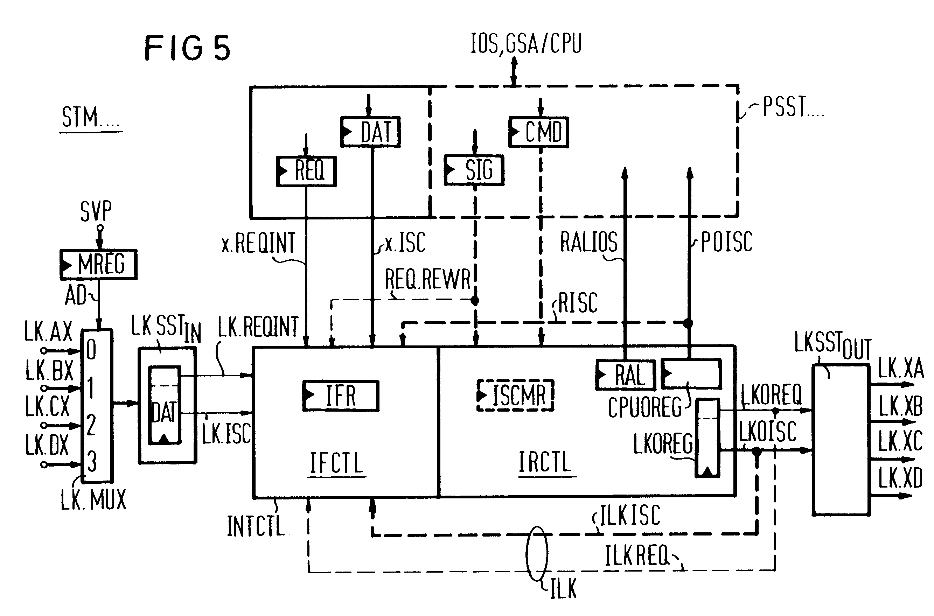

FIG 5 zeigt den strukturellen Aufbau eines Steuermoduls STM... mit Anschlüssen für vier Verbindungsleitungen ankommend, nämlich LK.AX bis LK.DX, und abgehend, nämlich LK.XA bis LK.XD, und einer Prozessorschnittstellensteuerung PSST für den Anschluß eines Prozessors, z.B. CPU oder IOS oder GSA, gemäß FIG 1 sowie die Unterbrechungssteuerschaltung INTCTL.

Jeweils eine ankommende Verbindungsleitung, z.B. LK.AX, und eine abgehende Verbindungsleitung, z.B. LK.XA, bilden dabei eine bidirektionale Verbindungsleitung zwischen einem der anderen Steuermodule, z.B. A, und dem dargestellten Modul X. Die ankommenden Verbindungsleitungen LK.AX bis LK.DX sind auf einen Auswahlschalter LK.MUX geführt, der abhängig von der Einstelladresse AD im Modusregister MREG eingestellt wird. Die Modusregister MREG aller Steuermodule STM... einer Unterbrechungssteuerung UB-ST sind z.B. vom Serviceprozessor SVP in vorgegebener Weise mit einer Einstelladresse AD ladbar. Andererseits werden über die abgehende Ringverbindung weiterzuleitende Unterbrechungsanforderungen parallel an alle angeschlossenen abgehenden Verbindungsleitungen, z.B. LK.XA bis LK.XD, übergeben, so daß allein durch Auswahl jeweils nur einer ankommenden Verbindungsleitung durch den Auswahlschalter LK.MUX in jedem Steuermodul die jeweils gewünschte Ringverbindung vom Serviceprozessor SVP aus herstellbar ist oder von einer bestehenden Ringverbindung auf eine andere umgeschaltet bzw. ein System neu konfiguriert werden kann.

Die jeweils vom Auswahlschalter LK.MUX wirksam geschaltete ankommende Verbindungsleitung, z.B. LK.AX, mündet in einer ankommenden Schnittstellensteuerung LKSST_{IN}, die in ähnlicher Weise wie die Prozessorschnittstelle PSST... ankommende Anforderungen auswertet und ein Anforderungssignal LK.REQINT erzeugt und die jeweilige Steuernachricht DAT vorübergehend zwischenspeichert.

Die Prozessorschnittstellensteuerung PSST... bildet das Bindeglied zwischen jeweils einem Prozessor IOS oder GSA oder CPU und der Unterbrechungssteuerschaltung INTCTL. Beim Anschluß eines Ein-/Ausgabeprozessors IOS oder GSA ist lediglich eine Unterbrechungsanforderung entgegenzunehmen und weiterzuleiten, während beim Anschluß eines Verarbeitungsprozessors CPU in der Regel keine Unterbrechungsanforderungen, sondern Anforderungen zur Änderung eines Maskenregisters ISCMR und beim virtuellen Betrieb zusätzlich ein Kennzeichen der gerade laufenden virtuellen Maschine vom Verarbeitungsprozessor CPU entgegenzunehmen sowie von der Unterbrechungssteuerschaltung INTCTL zugestellte Unterbrechungsanforderungen RALIOS an den Verarbeitungsprozessor weiterzuleiten sind. Die Prozessorschnittstellensteuerungen für alle Arten von Prozessoren stimmen daher in dem linken Schaltungsteil für die Entgegennahme der Anforderungen REQ und der zugehörigen Parameterdaten DAT überein, während die Prozessorschnittstellensteuerungen für die Verarbeitungsprozessoren CPU um den rechten Schaltungsteil zu ergänzen sind, der zusätzliche Signale SIG und zusätzliche Steuerbits CMD zur Kennzeichnung der Art der Anforderung vom Verarbeitungsprozessor CPU entgegennimmt und in Gegenrichtung Unterbrechungsanforderungen RAL mit den zugehörigen Parameterdaten DAT zugestellt bekommt. Die Darstellung ist dabei auf den für das Verständnis des Steuerungsablaufes notwendigen Teil beschränkt.

Die zentrale Unterbrechungssteuerschaltung INTCTL gliedert sich in eine Verwaltungssteuerung IFCTL mit dem Unterbrechungsanforderungsregister IFR und in eine Weiterleitungssteuerung IRCTL, die beim Anschluß eines Verarbeitungsprozessors CPU wenigstens ein die Zustellmaske ISCM beinhaltendes Maskenregister ISCMR aufweist.

Die Verwaltungssteuerung IFCTL nimmt einerseits über die Verbindungsleitung LK und von den Prozessorschnittstellensteuerungen PSST gelieferte Unterbrechungsanforderungen LK.REQINT bzw. x.REQINT entgegen und trägt diese in das Unterbrechungsanforderungsregister IFR ein, während im Unterbrechungsanforderungsregister IFR gespeicherte Unterbrechungsanforderungen prioritätsgesteuert ausgewählt und zur Weiterleitung an die Weiterleitungssteuerung IRCTL übergeben werden. Diese stellt die Anforderungen bei Anschluß eines Ein-/Ausgabeprozessors IOS oder GSA unmittelbar zur Weiterleitung über die abgehende Verbindungsleitung LK bereit, während beim Anschluß eines Verarbeitungsprozessors CPU anhand der vorliegenden Bezugsdaten, z.B. ISCM im Maskenregister ISCMR, geprüft wird, ob die Unterbrechungsanforderung dem lokal angeschlossenen Verarbeitungsprozessor CPU zugestellt werden kann oder nicht. Bei möglicher Zustellung erfolgt die Übergabe an die Prozessorschnittstellensteuerung PSST..., im anderen Falle die Weiterleitung an die abgehende Verbindungsleitung LK.

Für den Fall, daß eine Zustellung an den lokalen Verarbeitungsprozessor CPU erfolgt, dieser aber zwischenzeitlich nicht mehr annahmebereit ist, was von den Signalen SIG ableitbar ist, wird die an dem Verarbeitungsprozessor weiterzuleitende Unterbrechungsanforderung über den mit REQ.REWR und RISC bezeichneten Rückkopplungspfad wieder in das Unterbrechungsanforderungsregister IFR eingetragen.

Handelt es sich im Falle eines Monoprozessorsystems gemäß FIG 1 um das letzte Steuermodul der Kette oder gemäß FIG 2 um das einzige Steuermodul, so daß eine Weiterleitung über eine abgehende Verbindungsleitung nicht möglich ist, dann wird über eine interne Verbindungsleitung ILK die nicht weiterleitbare Unterbrechungsanforderung ebenfalls wieder in das Unterbrechungsanforderungsregister IFR eingetragen.

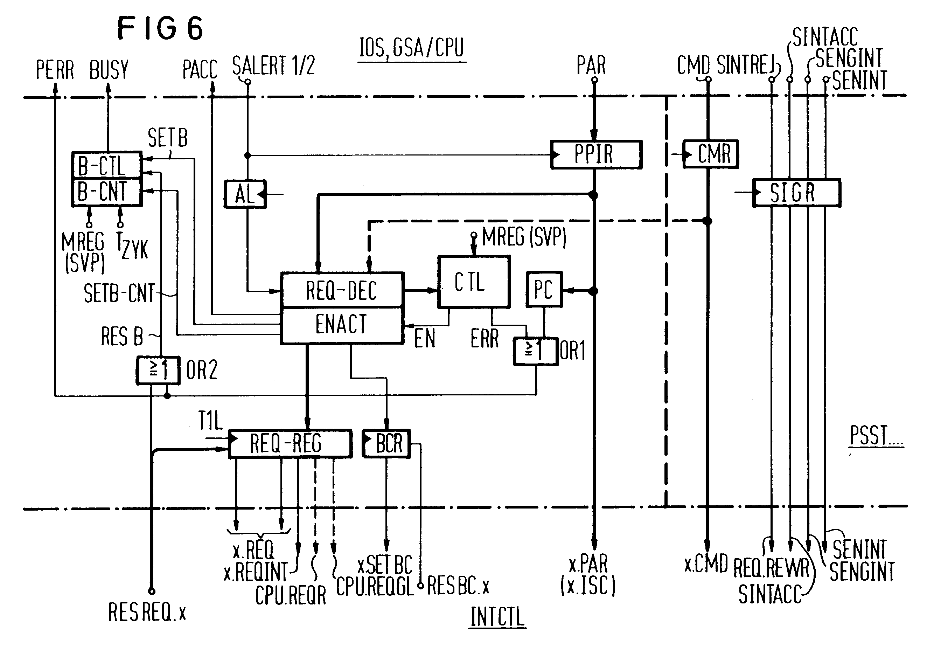

FIG 6 zeigt ein ausführlicheres Schaltbild des ankommenden Teiles der Schnittstellensteuerung PSST... von FIG 5. Dieser werden Anforderungen für die Unterbrechungssteuerschaltung INTCTL vom jeweils angeschlossenen Prozessor mit dem Signal SALERT2 zusammen mit dem Parameterwort PAR gemeldet. Handelt es sich bei dem angeschlossenen Prozessor um einen Verarbeitungsprozessor CPU, so werden gemäß dem rechten Schaltungsteil mit der Anforderung zusätzliche Steuerbits CMD übergeben. Ausserdem sind das Steuersignal SENINT, das die Annahmebereitschaft kennzeichnet, und das Steuersignal SINTREJ, das eine Annahmeverweigerung kennzeichnet, zu berücksichtigen, während mit dem Signal SINTACC die Annahme einer zugestellten Unterbrechungsanforderung quittiert wird. Das zusätzliche Signal SENGINT kennzeichnet bei Prozessorsystemen mit einem globalen Speicher die Annahmebereitschaft für Unterbrechungsanforderungen durch einen zugehörigen Ein-/Ausgabeprozessor GSA. Alle Schnittstellensignale SALERT2/SIG und die zugehörigen Daten PAR/CMD werden in Abfangregister AL, PPIR sowie CMR und SIGR übernommen und von dort der weiteren Verarbeitung zugeführt.

Für Unterbrechungsanforderungen eines Ein-/Ausgabeprozessors genügt allein das Anforderungssignal SALERT2, das unmittelbar in das Unterbrechungsanforderungssignal x.REQINT für die Unterbrechungssteuerschaltung INTCTL umgesetzt werden kann. Bei einheitlicher Gestaltung aller Prozessorschnittstellensteuerungen PSST... und insbesondere zur Abwicklung eines zusätzlichen Meldeverkehrs zwischen den einzelnen Prozessoren, was später noch erläutert werden wird, wird im vorliegenden Falle durch das Anforderungssignal SALERT2 ein Anforderungsdecoder REQ-DEC freigegeben, dem die mit dem Anforderungssignal übernommenen Parameterdaten aus dem Register PPIR und im Falle eines angeschlossenen Verarbeitungsprozessors CPU auch die Steuerbits CMD aus dem Register CMR zugeführt werden und der dann das eigentliche Anforderungssignal erzeugt. Dies wird durch eine nachfolgende Schaltergruppe ENACT beispielsweise nur freigegeben, wenn eine Überwachungseinrichtung CTL mit EN das vorliegende Parameterwort für gültig erachtet hat. Das nach dieser Prüfung freigegebene Anforderungssignal wird dann in einem Anforderungsregister REQ-REG gespeichert, bis die Anforderungen von der weiterverarbeitenden Einrichtung des Steuermoduls angenommen ist. Außerdem wird mit jeder freigegebenen Anforderung an der Prozessorschnittstelle durch die Steuereinrichtung B-CTL ein Belegsignal BUSY ausgelöst, das die Prozessorschnittstellensteuerung gegen weitere Anforderungen sperrt, bis es durch das Rücksetzsignal RESREQ.x für das Anforderungsregister REQ-REG wieder abgeschaltet wird.

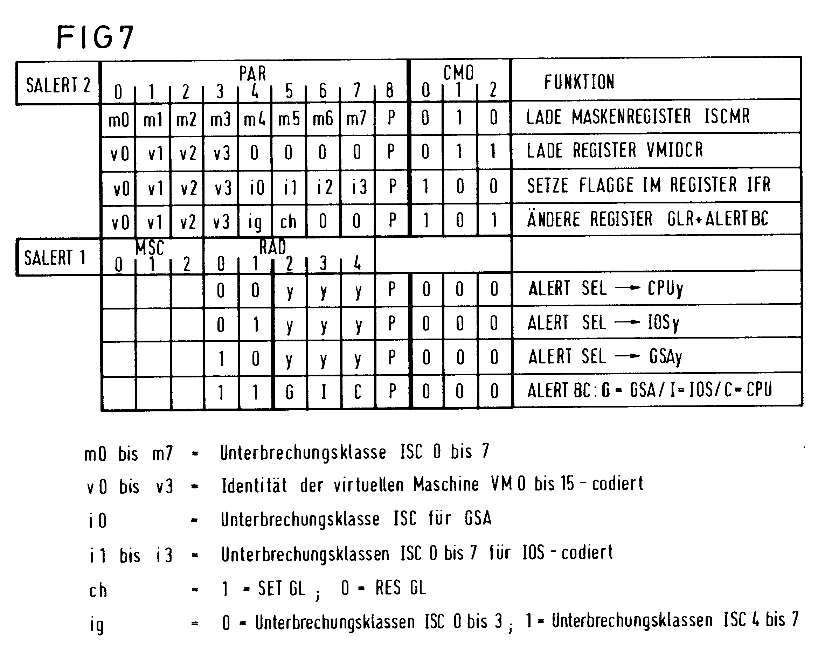

Der obere Teil von FIG 7 zeigt den Aufbau des Parameterwortes PAR bei Anforderungen mit dem Signal SALERT2, wobei bei Unterbrechungsanforderungen von einem der Ein-/Ausgabeprozessoren IOS oder GSA nur die Kombination der dritten Zeile von Bedeutung ist, während für Anforderungen von einem Verarbeitungsprozessor CPU in der Regel nur die Kombination der ersten, zweiten und vierten Zeile relevant sind und Unterbrechungsanforderungen gemäß der dritten Zeile nur für Testzwecke benutzt werden. Bei den Anforderungen eines Verarbeitungsprozessors handelt es sich nicht um echte Unterbrechungsanforderungen mit einem Eintrag ins Unterbrechungsanforderungsregister IFR, sondern um Anforderungen zum Einstellen von Registerinhalten, die als Bezugsdaten für die Zustellung einer Unterbrechungsanforderung in der Weiterleitungssteuerung IRCTL dienen, wobei die Unterscheidung der mit diesen Kombinationen verbundenen Funktionen anhand der Steuerbits CMD erfolgt.

Beim Laden der Unterbrechungsmaske ISCM gemäß der ersten Zeile kennzeichnen die acht Parameterbits PAR0 bis PAR7 mit m0 bis m7 im gesetzten Zustand die einzelnen Unterbrechungsklassen ISC0 bis ISC7, für die Unterbrechungsanforderungen zugestellt werden können. Analoges gilt für die zweite Zeile im Hinblick auf die Kennzeichnung der jeweils auf dem angeschlossenen Verarbeitungsprozessor laufenden virtuellen Maschine VM bei einem virtuellen Maschinensystem, wobei die Parameterbits PAR0 bis PAR3 mit v0 bis v3 eine Unterscheidung von 16 verschiedenen virtuellen Maschinen ermöglichen.

Auch die Kombination der vierten Zeile bezieht sich auf virtuelle Maschinensysteme. Sie ermöglicht eine Kennzeichnung im globalen Register, ob eine Anforderung für eine vorgegebene Gruppe von Unterbrechungsklassen einer vorgegebenen virtuellen Maschine einem angeschlossenen Verarbeitungsprozessor CPU zugestellt werden kann, obwohl auf diesem gerade eine andere virtuelle Maschine läuft, wobei die Parameterbits PAR0 bis PAR3 mit v0 bis v3 wiederum die virtuelle Maschine angeben, während das Parameterbit PAR4 mit i_{g} die Gruppe von Unterbrechungsklassen bei zwei möglichen Gruppen ISCO bis ISC3 und ISC4 bis ISC7 und das Parameterbit PAR5 mit ch das Setzen oder Löschen des entsprechenden Steuerbits im globalen Register kennzeichnet.

Bei einem realen Prozessorsystem sind daher bei Anforderungen durch den Verarbeitungsprozessor nur die Maskenbits m0 bis m7 entsprechend der ersten Zeile und bei Unterbrechungsanforderungen durch einen Ein-/Ausgabeprozessor nur die Unterbrechungsklassenbits i0 bis i3 entsprechend der dritten Zeile relevant.

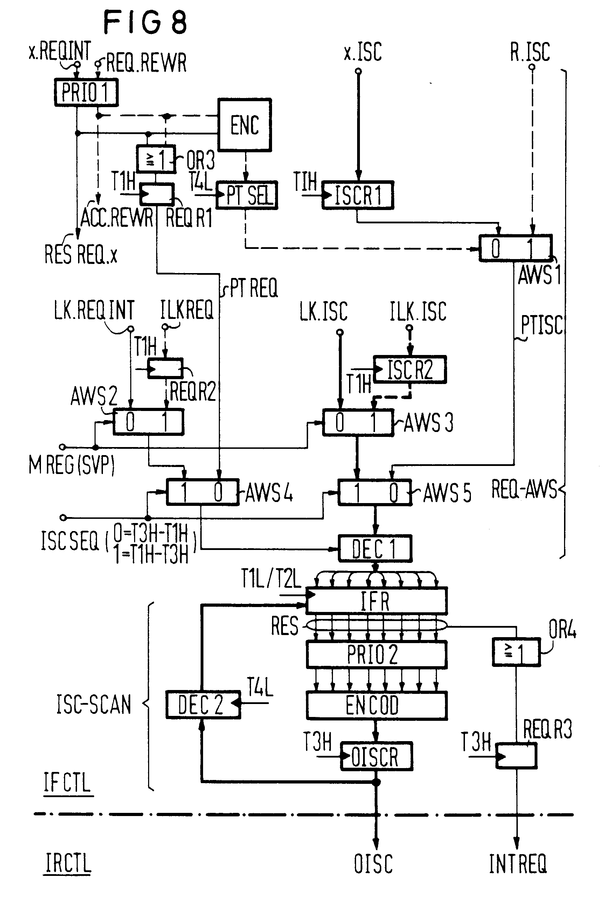

FIG 8 zeigt nähere Einzelheiten der Verwaltungssteuerung IFCTL der Unterbrechungssteuerschaltung INTCTL von FIG 5 für ein reales Prozessorsystem, wobei die gestrichelten Schaltungsteile im Steuermodul mit angeschlossenem Verarbeitungsprozessor CPU erforderlich sind, auf die bei Steuermodulen mit angeschlossenem Ein-/Ausgabeprozessor IOS verzichtet werden könnte, wenn jeweils nur ein Prozessor an jeweils eines der Steuermodule angeschlossen ist.

Der obere Teil betrifft die Auswahl von lokal entstandenen Anforderungen x.REQINT des angeschlossenen Ein-/Ausgabeprozessors IOS oder GSA sowie von Anforderungen REQ.REWR bei vom angeschlossenen Verarbeitungsprozessor CPU nicht angenommenen Unterbrechungsanforderungen. Die Auswahl einer dieser Anforderungen erfolgt bei einheitlicher Ausgestaltung durch eine Prioritätsschaltung PRIO1, deren Ausgänge über ein Oderglied OR3 auf ein Register REQR1 einwirken und das prozessorseitige Anforderungssignal PTREQ liefern. Außerdem wird das Ausgangssignal der Prioritätsschaltung PRIO1 durch einen nachgeschalteten Kodierer ENC in ein in einem Register PTSEL zwischengespeichertes Einstellsignal für den Auswahlschalter AWS1 umgewandelt, durch den die zur ausgewählten Anforderung gehörigen Daten für die Unterbrechungsklasse x.ISC bzw. RISC als prozessorseitige Daten PTISC für die Weiterverarbeitung zur Verfügung gestellt werden.

Bei nur einem angeschalteten Ein-/Ausgabeprozessor je Steuermodul steht eine prozessorseitige Anforderung PTREQ nur in Konkurrenz mit einer Anforderung LK.REQINT über die ankommende Verbindungsleitung LK, so daß die Auswahl direkt durch den Auswahlschalter AWS4 mit paralleler Auswahl der zugehörigen Unterbrechungsklasse LK.ISC oder PTISC durch den Auswahlschalter 5 erfolgen könnte. Diese Auswahlschalter werden periodisch mit dem Signal ISCSEQ umgesteuert, so daß abwechselnd eine Anforderung über die ankommende Verbindungsleitung LK und vom lokal angeschlossenen Prozessor für die Eintragung im Unterbrechungsanforderungsregister IFR ausgewählt wird.

Bei einem Monoprozessorsystem mit einem einzigen Steuermodul, an das alle Prozessoren des Systems angeschlossen sind, entfällt die ankommende Verbindungsleitung LK und stattdessen werden die von der Unterbrechungssteuerschaltung INTCTL zur Zeit nicht zustellbaren und daher über die abgehende Verbindungsleitung normalerweise weiterzuleitenden Unterbrechungsanforderungen über die interne Verbindungsleitung ILK entsprechend FIG 5 wieder ins Unterbrechungsanforderungsregister IFR eingetragen. Diese Umschaltung wird - wie in FIG 8 dargestellt - durch die Auswahlschalter AWS2 und AWS3 abhängig vom Modusregister MREG gesteuert, das auch in dieser Hinsicht vom Serviceprozessor SVP einstellbar ist.

Bei einem Monoprozessorsystem mit nur einem Prozessoranschluß je Steuermodul und keiner Ringverbindung für die Steuermodule ist dagegen die interne Verbindungsleitung ILK zusätzlich zur ankommenden Verbindungsleitung LK zu berücksichtigen, so daß auch in diesem Falle eine wechselnde Umschaltung zwischen den Anforderungen LK.REQINT und ILKREQ stattfinden müßte, um beide Anforderungsquellen zu berücksichtigen, damit keine Anforderung verlorengeht; es sei denn man würde zusätzliche Pufferspeicher vorsehen. Bei einer Ringverbindung kann dagegen auf die interne Verbindungsleitung ILK verzichtet werden, da die Unterbrechungsanforderungen dann im Ring umlaufen können.

Die vom Auswahlschalter AWS5 jeweils durchgeschaltete Unterbrechungsklasse ISC in kodierter Darstellung wird einem Dekodierer DEC1 zugeführt, der mit jeder vom Auswahlschalter AWS4 ausgewählten Anforderung wirksam geschaltet wird und für die jeweils betroffene Registerstufe des Unterbrechungsanforderungsregisters IFR ein Setzsignal liefert, durch das die jeweilige Anforderung entsprechend der zugehörigen Unterbrechungsklasse in das Unterbrechungsanforderungsregister eingetragen wird.

Alle im Unterbrechungsanforderungsregister IFR eingetragenen Unterbrechungsanforderungen werden durch eine nachgeschaltete Prioritätsschaltung PRIO2 überwacht, wobei die jeweils bevorrechtigte Anforderung ausgewählt, durch einen nachgeschalteten Kodierer ENCOD wieder kodiert und im Register OISCR zur Übergabe als Kennzeichen OISC für die betroffene Unterbrechungsklasse an die Weiterleitungssteuerung IRCTL bereitgestellt wird. Außerdem wird anhand dieses Kennzeichens über den Dekodierer DEC2 ein entsprechendes Rücksetzsignal RES für die im Unterbrechungsanforderungsregister IFR zu löschende Unterbrechungsanforderung erzeugt.

Parallel dazu werden die Ausgänge des Unterbrechungsanforderungsregisters IFR durch ein ODER-Glied OR4 auf das Vorliegen einer Anforderung überwacht und das jeweilige Ergebnis im Register REQR3 gespeichert, das mit dem Signal INTREQ der Weiterleitungssteuerung IRCTL das Vorliegen einer Anforderung anzeigt.

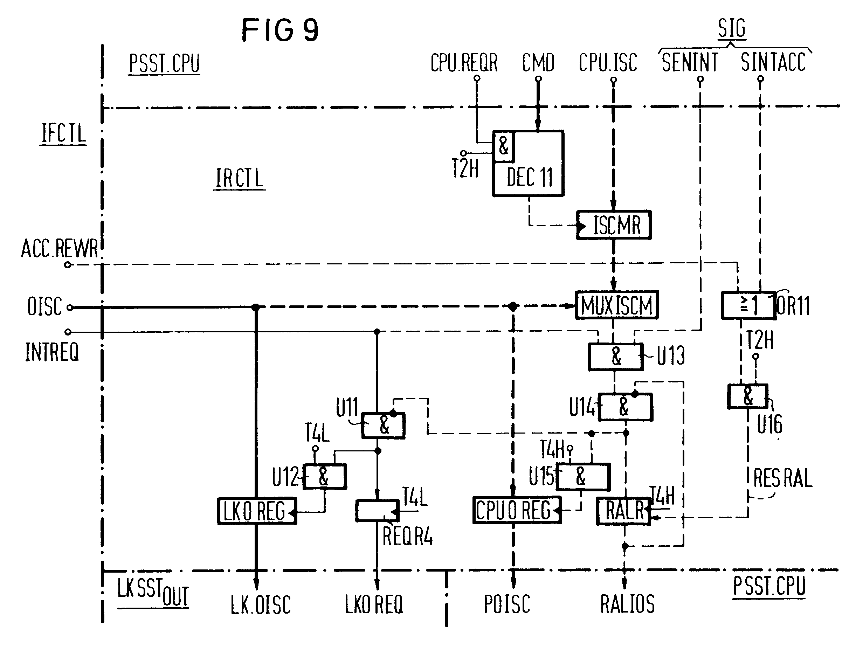

Einzelheiten der Weiterleitungssteuerung IRCTL zeigt FIG 9, wobei der gestrichelte Schaltungsteil sich wiederum auf ein Steuermodul mit Anschluß eines Verarbeitungsprozessors CPU bezieht. Bei Anschluß nur eines Ein-/Ausgabeprozessors IOS oder GSA werden die von der Weiterleitungssteuerung bereitgestellten Anforderungen INTREQ/OISC unmittelbar in die Weiterleitungsregister LKOREG und REQR4 für die Schnittstellensteuerung LKSST_{OUT} der abgehenden Verbindungsleitung LK übernommen.

Bei einem an einem Steuermodul angeschlossenen Verarbeitungsprozessor CPU ist dagegen entsprechend dem gestrichelten Schaltungsteil zusätzlich die Zustellbarkeit der Unterbrechungsanforderung an den angeschlossenen Verarbeitungsprozessor anhand der vorliegenden und im Register ISCMR gespeicherten Zustellmaske zu prüfen. Diese Zustellmaske besteht je Unterbrechungsklasse aus einem Steuerbit und dient dem Vergleich mit der Unterbrechungsklasse OISC der jeweiligen Anforderung. Im vorliegenden Falle wird der Vergleich mittels eines Auswahlschaltgliedes MUXISCM durchgeführt, der durch die mitgeteilte Unterbrechungsklasse OISC eingestellt wird und damit das zugehörige Steuerbit aus dem Maskenregister ISCMR auf den Ausgang durchschaltet. Ein nachgeschaltetes UND-Glied U13 prüft dann, ob das Steuerbit abgesetzt ist, ob gleichzeitig auch das Anforderungssignal INTREQ=1 vorliegt und ob der lokale Verarbeitungsprozessor mit dem Signal SENINT=1 seine Annahmebereitschaft anzeigt. Sind alle drei Bedingungen erfüllt, wird einerseits das Anforderungsregister RALR über ein vorgeschaltetes UND-Glied U14 gesetzt und ein Anforderungssignal RALIOS für die Prozessorschnittstellensteuerung PSST.CPU ausgelöst sowie andererseits die mitgeteilte Unterbrechungsklasse OISC ins Ausgaberegister CPUOREG übernommen.

Mit dem Ausgangssignal des UND-Gliedes U14 wird außerdem ein dem Anforderungsregister REQR4 vorgeschaltetes UND-Glied U11 gesperrt, so daß eine Übernahme in die Weiterleitungsregister REQR4 und LKOREG für die abgehende Verbindungsleitung LK nicht möglich ist. Weiterhin wird mit der Erzeugung des Anforderungssignales RALIOS das UND-Glied U14 wieder gesperrt und ein Über-schreiben der Register RALR und CPUOREG verhindert, bis der angeschlossene Verarbeitungsprozessor CPU die Annahme der zugestellten Unterbrechungsanforderung mit dem Signal SINTACC quittiert, wodurch das Register RALR wieder zurückgesetzt wird.

Sollte zwischenzeitlich der zunächst annahmebereite Verarbeitungsprozessor wegen Wegnahme des Signals SENINT (FIG 6) die Annahme der an die zugehörige Prozessorschnittstelle PSST.CPU gerichteten Unterbrechungsanforderung verweigern, was durch das Signal SINTREJ angezeigt wird, dann führt dieses Signal als Anforderungssignal REQ.REWR unmittelbar zur Rückeintragung der Unterbrechungsanforderung ins Unterbrechungsanforderungsregister IFR (FIG 8 oben). Mit Annahme dieser Rückschreibanforderung wird dann von der Prioritätsschaltung PRIO1 ein Quittungssignal ACC.REWR erzeugt, das in der Weiterleitungssteuerung IRCTL über das ODER-Glied OR11 in gleicher Weise wie das vom Verarbeitungsprozessor CPU kommende Quittungssignal SINTACC das Anforderungsregister RALR mit RESRAL zurücksetzt.

Bis zu diesem Zeitpunkt bleibt das UND-Glied U14 gesperrt, so daß von der Verwaltungssteuerung IFCTL bereitgestellte Anforderungen zwangsläufig zur abgehenden Verbindungsleitung LK weitergeleitet werden.

Das Laden des Maskenregisters ISCMR durch den lokalen Verarbeitungsprozessor CPU erfolgt, wie bereits anhand von FIG 7 erläutert, ebenfalls mit einem Anforderungssignal SALERT2, wobei jedoch die zusätzlichen Steuerbits CMD anzeigen, daß es sich nicht um eine Unterbrechungsanforderung, sondern um eine Registeranforderung handelt, die von der Prozessorschnittstellensteuerung PSST.CPU in ein Anforderungssignal CPU.REQR (FIG 6) umgesetzt wird. Dieses Anforderungssignal gibt in der Weiterleitungssteuerung IRCTL den Dekodierer DEC11 für die Auswertung der Steuerbits CMD frei. Ist im vorliegenden Falle das Maskenregister ISCMR zu laden, dann wird ein entsprechender Übernahmetakt für dieses Register abgeleitet, das die im Parameterwort PAR enthaltenen Steuerbits m0 bis m7 als Unterbrechungsmaske CPU.ISC übernimmt.

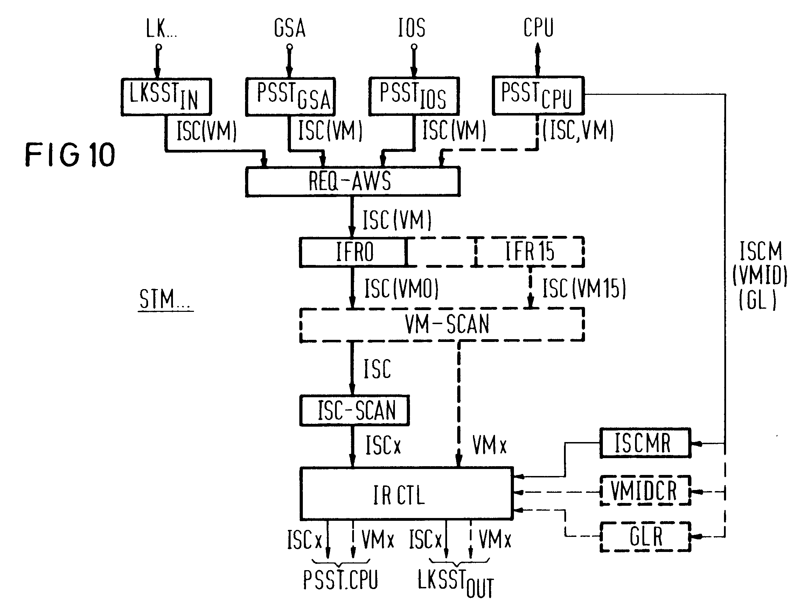

FIG 10 zeigt den strukturellen Aufbau der Steuermodule STM... für ein Multiprozessorsystem gemäß FIG 2 mit mehreren verschiedenen, an ein Steuermodul angeschlossenen Prozessoren IOS, GSA und CPU, wobei das Prozessorsystem auch als virtuelles Maschinensystem betrieben werden kann, was durch die gestrichelten Schaltungsteile angedeutet ist. Anstelle von Anforderungen von nur einer Prozessorschnittstellensteuerung PSST... sind nun Anforderungen von mehreren solchen Schnittstellensteuerungen je Steuermodul durch die Auswahleinrichtung REQ-AWS für die Anforderungen zu berücksichtigen. Außerdem ist im virtuellen Maschinensystem für jede virtuelle Maschine VM ein gesondertes Unterbrechungsanforderungsregister IFR... vorzusehen, wobei eine zusätzliche Auswahlsteuerung VM-SCAN jeweils eines der Unterbrechungsanforderungsregister IFR... auswählt, aus dem dann die Auswahlsteuerung ISC-SCAN vorliegende Anforderungen nacheinander zur Weiterleitung bereitstellt. Hinzu kommen außerdem zwei weitere Register, nämlich VMIDCR zur Kennzeichnung der auf einem Verarbeitungsprozessor gerade laufenden virtuellen Maschine VM... und Register GLR... zur Kennzeichnung von globalen Zuständigkeiten eines Verarbeitungsprozessors bei einer von der auf ihm laufenden virtuellen Maschine abweichenden Anforderung für eine andere virtuelle Maschine. Auch diese zusätzlichen Register sind, wie anhand von FIG 7 bereits erläutert, vom jeweils lokalen Verarbeitungsprozessor CPU durch eine entsprechende Anforderung SALERT2 in gleicher Weise wie das Maskenregister ISCMR direkt ladbar und sie beeinflussen zusätzlich die Weiterleitungssteuerung IRCTL.

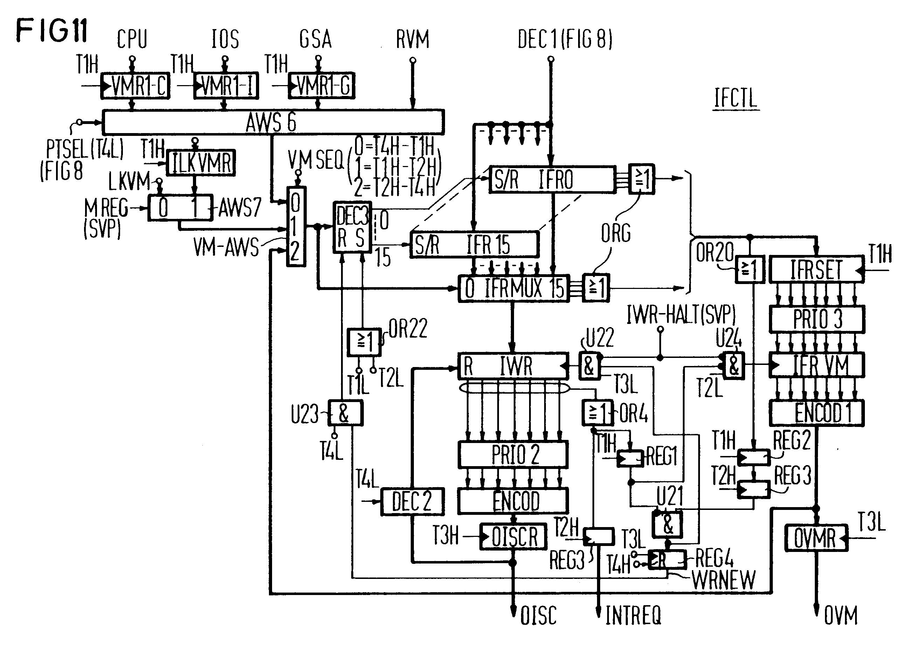

FIG 11 zeigt in Anlehnung an FIG 8 eine entsprechend erweiterte Verwaltungssteuerung IFCTL für ein virtuelles Maschinensystem mit maximal 16 virtuellen Maschinen VM0 bis VM15, wobei die Anforderungsauswahlsteuerung REQ-AWS im Prinzip dem oberen Teil von FIG 8 entspricht, durch die am Ausgang des Decodierers DEC1 die jeweilige Unterbrechungsklasse ISC für das Eintragen einer entsprechenden Unterbrechungsanforderung in eines der Register IFR0 bis IFR15 zur Verfügung gestellt wird. Entsprechend hat die Prioritätsschaltung PRIO1 von FIG 8 mehrere Prozessoranforderungen x.REQINT von allen lokalen Prozessoren IOS, GSA und CPU auszuwerten und entsprechende Rücksetzsignale RESREG.x zu erzeugen. Weiterhin sind statt einer Quelle x.ISC entsprechend viele Quellen zu berücksichtigen und durch den Auswahlschalter AWS1 auszuwählen. Dagegen bleibt der übrige Teil der Auswahlsteuerung von FIG 8, der die zusätzlichen Anforderungen über die ankommende Verbindungsleitung betrifft, unverändert, wobei die Auswahlschalter AWS2 und AWS3 durch das Modusregister MREG normalerweise konstant auf den Eingang 0 eingestellt sind.

Eine zusätzliche Auswahlsteuerung ist gemäß dem linken oberen Teil von FIG 11 außerdem für die Auswahl des jeweiligen Unterbrechungsanforderungsregisters IFR... erforderlich, die anhand der Kennzeichnung für die jeweilige virtuelle Maschine VM getroffen wird. Diese Kennzeichnung wird mit jeder Unterbrechungsanforderung durch die Parameterbits PAR0 bis PAR3 als v0 bis v3 gemäß FIG 7 geliefert und im Register VMR1-... für die einzelnen Prozessoren zwischengespeichert. Der Auswahlschalter AWS6 wählt dann jeweils parallel zur Unterbrechungsklasse ISC mit der Einstellinformation PTSEL von FIG 8 die jeweils zutreffende Kennzeichnung aus. Analoges gilt für die über die Verbindungsleitung LK und für die im Monobetrieb über die interne Verbindungsleitung ILK zur Verfügung gestellten Kennzeichnungen LKVM bzw. ILKVM, deren Auswahlsteuerung der für die Anforderungssignale in FIG 8 entspricht.

Die von den Prozessoren und den Verbindungsleitungen so zur Verfügung gestellten Kennzeichnungen der jeweiligen virtuellen Maschine VM werden abwechselnd durch ein mit VMSEQ einstellbaren Auswahlschalter VM-AWS einem Dekodierer DEC3 zugeleitet, über dessen Ausgänge 0 bis 15 jeweils eines der Unterbrechungsanforderungsregister IFR0 bis IFR15 zum Eintragen der am Dekodierer DEC1 bereitstehenden Unterbrechungsanforderung ausgewählt wird.

Zum Austragen und Weiterleiten einer in eines der Unterbrechungsanforderungsregister IFR... eingetragenen Unterbrechungsanforderungen werden die Ausgänge aller Unterbrechungsanforderungsregister durch eine Oderglied-Kombination ORG auf das Vorliegen einer Unterbrechungsanforderung überwacht und die Ergebnisse für jedes Unterbrechungsanforderungsregister IFR... als Steuerbit in ein Überwachungsregister IFRSET übernommen. Eine Prioritätssteuerschaltung PRIO3 überwacht fortlaufend die Ausgänge dieses Registers und wählt der Reihe nach ein gekennzeichnetes Unterbrechungsanforderungsregister IFR... aus, das dann in einem Folgeregister IFRVM markiert wird. Ein nachgeschalteter Kodierer ENCOD1 liefert dann die der virtuellen Maschine VM entsprechende Kennzeichnung, die einerseits in ein Weiterleitungsregister OVMR für die Weiterleitungssteuerung IRCTL übernommen und andererseits einem Eingang des Auswahlschalters VM-AWS zugeleitet wird.

Der Ausgang dieses Auswahlschalters VM-AWS steuert parallel zum Dekodierer DEC3 als Einstellsignal den Auswahlschalter IFRMUX, der die Ausgänge des jeweils durch das Einstellsignal ausgewählten Unterbrechungsanforderungsregisters IFR... zum Register IWR durchschaltet. Dieses übernimmt den Inhalt des jeweiligen Unterbrechungsanforderungsregisters aber nur dann, wenn über das die Ausgänge aller Unterbrechungsanforderungsregister IFR0 bis IFR15 überwachende ODER-Glied OR20 und die nachgeschalteten Register REG2 und REG3 über das UND-Glied U21 ein Übernahmesignal ausgelöst wird. Dies kann überdies nur ausgelöst werden, wenn im Register IWR keine Unterbrechungsanforderung vorliegt und daher über das die Ausgänge des Registers überwachende ODER-Glied OR4 mit dem nachgeschalteten Register REG1 das UND-Glied U21 freigegeben ist. Andererseits wird mit dem Setzen des Registers REG1 das UND-Glied U24 gesperrt, so daß eine Veränderung des Inhaltes im Register IFRVM nicht möglich ist und die Kennzeichnung der jeweils ermittelten virtuellen Maschine VM vorübergehend festgeschrieben wird, bis alle im Register IWR aus dem jeweils angesteuerten Unterbrechungsanforderungsregister übertragenen Anforderungen an die Weiterleitungssteuerung IRCTL weitergeleitet sind und über das ODER-Glied OR4 die UND-Glieder U21 und U24 wieder freigegeben werden.

Die Weiterleitung der im Register IWR gespeicherten Unterbrechungsanforderungen erfolgt in gleicher Weise wie bei FIG 8 mittels der an die Ausgänge des Registers angeschalteten Prioritätssteuerschaltung PRIO2 mit nachgeschaltetem Kodierer ENCOD und dem Weiterleitungsregister OISCR, wobei der Dekodierer DEC2 das Rücksetzen der jeweils aus dem Register IWR ausgewählten und weitergeleiteten Unterbrechungsanforderung steuert. Zusätzlich wird mit jeder Übernahme der in dem jeweils ausgewählten Unterbrechungsanforderungsregister IFR... gespeicherten Unterbrechungsanforderungen in das Register IWR durch Setzen des Registers REG4 ein Löschsignal WRNEW ausgelöst, das über das UND-Glied U23 alle Eintragungen im jeweils durch den Dekodierer DEC3 zu diesem Zeitpunkt ausgewählten Unterbrechungsanforderungsregister löscht.

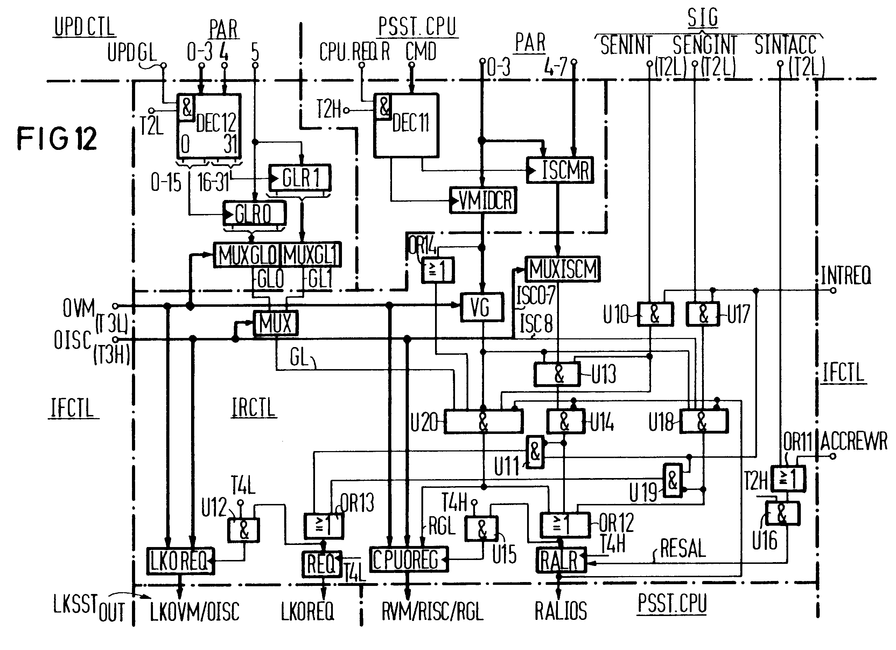

Die zugehörige Weiterleitungssteuerung IRCTL gemäß FIG 12 ist gegenüber der von FIG 9 ebenfalls erweitert. Diese Erweiterung bezieht sich zum einen auf das zusätzliche Kontrollregister VMIDCR, das die jeweils auf dem angeschlossenen Verarbeitungsprozessor CPU laufende virtuelle Maschine VM... kennzeichnet und daß in gleicher Weise wie das Maskenregister ISCMR auf Anforderungen durch den Verarbeitungsprozessor ladbar ist, wobei der Dekodierer DEC11 abhängig von den zugeführten Steuerbits CMD zwei unterschiedliche Übernahmesignale erzeugt.

Desweiteren sind zwei globale Register GLR0 und GLR1 vorgesehen, die je virtuelle Maschine VM... und jeweils einer von insgesamt zwei Gruppen von Unterbrechungsklassen ISC eine Registerstufe für ein Steuerbit aufweisen, das gemäß FIG 7 vom Parameterbit PAR5 abgeleitet wird. Die Auswahl der jeweiligen Registerstufe erfolgt durch den Dekodierer DEC12 bei entsprechender Anforderung UPDGL abhängig von den Parameterbits PAR0 bis PAR3 zur Kennzeichnung der jeweiligen virtuellen Maschine VM... und von dem Parameterbit PAR4 zur Kennzeichnung der Unterbrechungsklassengruppe entsprechend einem der beiden Register GLR0 oder GLR1. Abhängig von der jeweils gemäß der Kennzeichnung OVM betroffenen virtuellen Maschine VM wird durch die Auswahlschalter MUXGL0 und MUXGL1 das jeweils betroffene Steuerbit GL0 bzw. GL1 und anschließend anhand von der Kennzeichnung OISC über den Auswahlschalter MUX daraus das Steuerbit der jeweiligen Unterbrechungsklassengruppe ausgewählt, das dann als Steuerbit GL wirksam wird.

Abhängig vom Vorliegen einer Anforderung INTREQ der Verwaltungssteuerung IFCTL wird in Anlehnung an FIG 9 eine Unterbrechungsanforderung RALIOS über die UND-Glieder U13 und U14 in Verbindung mit dem ODER-Glied OR12 und dem Register RALR für den angeschlossenen Verarbeitungsprozessor CPU wirksam, wenn der Verarbeitungsprozessor mit dem Signal SENINT=1 annahmebereit, das Ausgangssignal des Auswahlschalters MUXISCM eine Übereinstimmung der Unterbrechungsklassen ISC... anzeigt und zusätzlich die mit der Anforderung durch die Kennzeichnung OVM bestimmte virtuelle Maschine VM mit der im Kontrollregister VMIDCR gespeicherten Kennzeichnung übereinstimmt, was durch den Vergleicher VG überwacht wird.

Zusätzlich erfolgt eine Zustellung, wenn entweder mit INTREQ=1 und SENGINT=1 über das UND-Glied U17 das UND-Glied U18 aufgesteuert wird, weil die mitgeteilte Unterbrechungsklasse OISC mit ISC=8 eine Unterbrechungsanforderung durch einen Prozessor GSA anzeigt und der Vergleicher VG angesprochen hat, oder wenn mit INTREQ=1 und SENINT=1 das UND-Glied U20 aufgesteuert wird, weil das Signal GL=1 vorliegt, der Vergleicher VG nicht angesprochen hat und die im Kontrollregister VMIDCR gekennzeichnete virtuelle Maschine nicht der dem Hypervisor zugeordneten virtuellen Maschine VM0 entspricht, was mit dem ODER-Glied OR14 überwacht wird. Im letzteren Fall liegt eine globale Unterbrechungsanforderung vor, die jedem Verarbeitungsprozessor CPU zugestellt werden kann, obwohl die auf ihm laufende virtuelle Maschine VM eine von der Anforderung abweichende virtuelle Maschine ist. Das Vorliegen einer solchen globalen Unterbrechungsanforderung wird dem Verarbeitungsprozessor CPU durch das vom Ausgang des UND-Gliedes U20 abgeleitete Signal RGL, das in das Weiterleitungsregister CPUOREG ebenfalls übernommen wird, gesondert gemeldet.

Ist dagegen keine der vorangehend erläuterten Bedingungen erfüllt, wird die Unterbrechungsanforderung statt an die Prozessorschnittstellensteuerung PSST.CPU für den lokalen Verarbeitungsprozessor CPU über die abgehende Verbindungsleitung LK weitergeleitet, indem über das UND-Glied U11 oder U19 und das gemeinsame ODER-Glied OR13 das Anforderungssignal INTREQ unmittelbar an das Anforderungsregister REQ weitergeleitet wird.

Soll das Multiprozessorsystem dagegen als reales Maschinensystem betrieben werden, dann sind nur Unterbrechungsanforderungen für die Kennzeichnung VM=0 zulässig und alle Steuerbits in den globalen Registern GLR0 und GLR1 sowie der Inhalt des Registers VMIDCR sind auf 0 zu setzen.

Da abweichend von den individuellen Registern ISCMR und VMIDCR die globalen Register GLR... aus Leistungsgründen in allen Steuermodulen mit gleichlautenden Einträgen zu versehen sind, müssen Änderungen in einem der Register GLR eines Steuermoduls STM... auch bei den entsprechenden Registern GLR... aller übrigen Steuermodule der Unterbrechungssteuerung UB-ST vorgenommen werden. Anforderungen CPU.REQGL eines Verarbeitungsprozessors CPU zur Änderung des Eintrags im globalen Register GLR... des zugehörigen Steuermoduls sind daher nicht nur an die lokale Unterbrechungssteuerschaltung INTCTL zu richten, sondern sie müssen über die abgehende Verbindungsleitung LK auch an alle übrigen Steuermodule STM... weitergeleitet werden, so daß in jedem Steuermodul zu den Anforderungen CPU.REQGL des lokalen Verareitungsprozessors auch über die ankommende Verbindungsleitung LK eintreffende Anforderungen LK.REQGL berücksichtigt werden müssen.

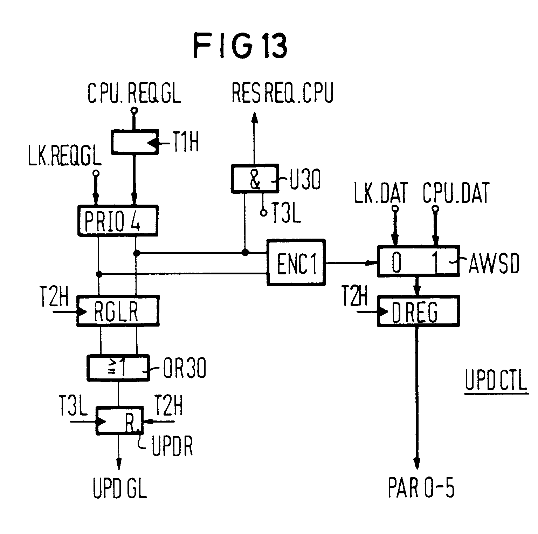

FIG 13 zeigt eine entsprechende Steuerschaltung, die im Prinzip der für die Auswahl von Unterbrechungsanforderungen x.REQINT im oberen Teil von FIG 8 entspricht. Über eine Prioritätssteuerschaltung PRIO4 wird jeweils eine der Anforderungen ausgewählt, die dann zum Anforderungssignal UPDGL für die Weiterleitungssteuerung IRCTL in FIG 12 führt. Weiterhin wird mit einem Kodierer ENC1 ein Einstellsignal für den die zugehörigen Daten LK.DAT oder CPU.DAT auswählenden Auswahlschalter AWSD erzeugt, mit dem dann der Dekodierer DEC12 in FIG 12 angesteuert wird.

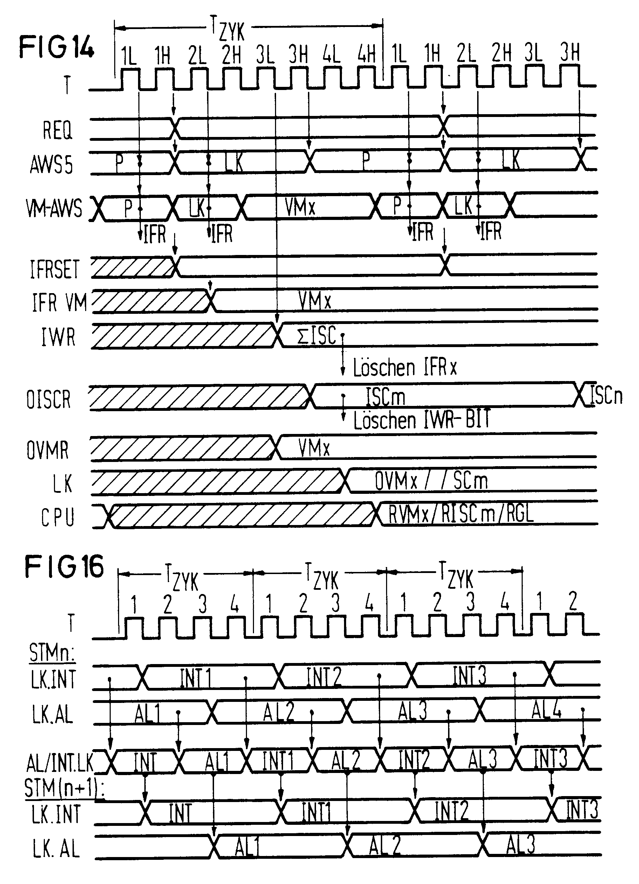

FIG 14 zeigt ein der Schaltungsanordnung von FIG 11 und FIG 12 zugrundegelegtes Ablaufdiagramm zur Verdeutlichung der Arbeitsweise. Dabei ist zugrundegelegt, daß die Übernahme einer Unterbrechungsanforderung REQ, das Eintragen in das Unterbrechungsanforderungsregister IFR..., das Auswählen sowie das Weiterleiten jeweils in einem Arbeitszyklus T_{ZYK} erfolgt, der von den Takten T1L/H, T2L/H, T3L/H und T4L/H gebildet wird. Unterbrechungsanforderungen REQ der verschiedenen Quellen werden mit Takten T1H übernommen und stehen für eine vollständigen Zyklus T_{ZYK} zur Verfügung. Das Einstellsignal ISCSEQ für den Auswahlschalter AWS5 in FIG 8 wechselt jeweils mit den Takten T1H und T3H, so daß abwechselnd eine Unterbrechungsanforderung von der Verbindungsleitung LK oder von den Prozessoren P zum Eintrag ins Unterbrechungsanforderungsregister IFR... ausgewählt wird. Das Einstellsignal für den Auswahlschalter VM-AWS für die Auswahl des jeweiligen Unterbrechungsanforderungsregisters IFR... erfolgt durch das Einstellsignal VMSEQ mit dem Takt T4H mit Bezug auf Anforderungen der lokalen Prozessoren und mit Takt T1H mit Bezug auf die ankommende Verbindungsleitung LK, wobei der Eintrag der zugehörigen Unterbrechungsanforderung mit dem jeweils nachfolgenden Takt T1L bzw. T2L erfolgt. Ab dem Takt T2H wird dagegen für die Dauer eines halben Verarbeitungszyklus T_{ZYK} der Eintragungsvorgang gesperrt. In dieser Zeit erfolgt das Abtasten der Unterbrechungsanforderungsregister IFR nach eingetragenen Unterbrechungsanforderungen, wobei mit jedem Takt T1H die Ausgangssignale ins Register IFRSET übernommen werden. Mit dem nachfolgenden Takt T2L steht anschließend im Register IFRVM mit VMx das jeweils auszuwählende Unterbrechungsanforderungsregister IFRx fest, so daß über den Auswahlschalter IFRMUX dessen Inhalt mit Takt T3L ins Register IWR übernommen werden kann. Mit jedem nachfolgenden Takt T3H wird dann eine der vorliegenden Unterbrechungsanforderungen ausgewählt und im Register OISCR bereitgestellt, während das die zugehörige virtuelle Maschine angebende Kennzeichen OVM im Register OVMR bereits mit Takt T3L zur Weiterleitung bereitsteht. Mit Takt T4L wird außerdem die aus dem Register IWR jeweils weitergeleitete Unterbrechungsanforderung und weiterhin über den Dekodierer DEC3 (FIG 11) das mit VMx ausgewählte Unterbrechungsanforderungsregister IFRx insgesamt gelöscht. Die ausgewählte Unterbrechungsanforderung wird anschließend in der Weiterleitungssteuerung IRCTL gemäß FIG 12 mit Takt T4L für die Weiterleitung über die abgehende Verbindungsleitung LK oder mit Takt T4H für die Zustellung an den lokalen Verarbeitungsprozessor CPU bereitgestellt.

Die abwechselnde Berücksichtigung von Unterbrechungsanforderungen der ankommenden Verbindungsleitung LK und der angeschlossenen Prozessoren ist nicht unbedingt erforderlich, wenn im Übertragungsweg der Ringverbindung ausreichend große Puffer vorgesehen werden und die Übertragungssteuerung darauf abgestellt ist. Sind diese aufwendigen Randbedingungen nicht erfüllt, wird auf diese Weise sichergestellt, daß auch bei Auslastung der Ringverbindung noch Unterbrechungsanforderungen der Prozessoren berücksichtigt werden können. Das gilt insbesondere, wenn wie noch erläutert werden wird, alle Steuermodule einer Unterbrechungssteuerung UB-ST synchron arbeiten und eine an die abgehende Verbindungsleitung LK weitergeleitete Unterbrechungsanforderung im nächsten Steuermodul STM... unbedingt entgegengenommen werden muß, wenn sie nicht verlorengehen soll.

Wie bereits im Zusammenhang mit FIG 13 erwähnt, sind bei Anforderungen CPU.REQGL der Verarbeitungsprozessoren CPU zur Änderung der Eintragung in den globalen Registern GLR... die Anforderungen nicht nur an die Unterbrechungssteuerschaltung INTCTL des Steuermoduls STM..., an das der Verarbeitungsprozessor CPU angeschlossen ist, sondern auch an die Unterbrechungssteuerschaltungen INTCTL aller übrigen Steuermodule STM... der Unterbrechungssteuerung UB-ST weiterzuleiten. Diese Aufgabe wird zweckmäßig von einer gesonderten Meldesteuerschaltung ALCTL übernommen, die parallel zur Unterbrechungssteuerschaltung INTCTL entsprechenden Meldeanforderungen vom lokalen Verarbeitungsprozessor CPU und der jeweils ankommenden Verbindungsleitung LK entgegennimmt und diese sowohl an die lokale Unterbrechungssteuerschaltung INTCTL als auch über die abgehende Verbindungsleitung LK weiterleitet, bis die globalen Register GLR... in allen Steuermodulen STM... erreicht sind. Diese zusätzlichen Meldungen können über gesonderte Verbindungsleitungen übertragen werden, was aber zusätzlichen Aufwand erfordert. Vorteilhaft ist es dagegen, die für die Übertragung von Unterbrechungsanforderungen bereits vorhandenen Verbindungsleitungen auch für die Übertragung der zusätzlichen Meldungen zu nutzen.

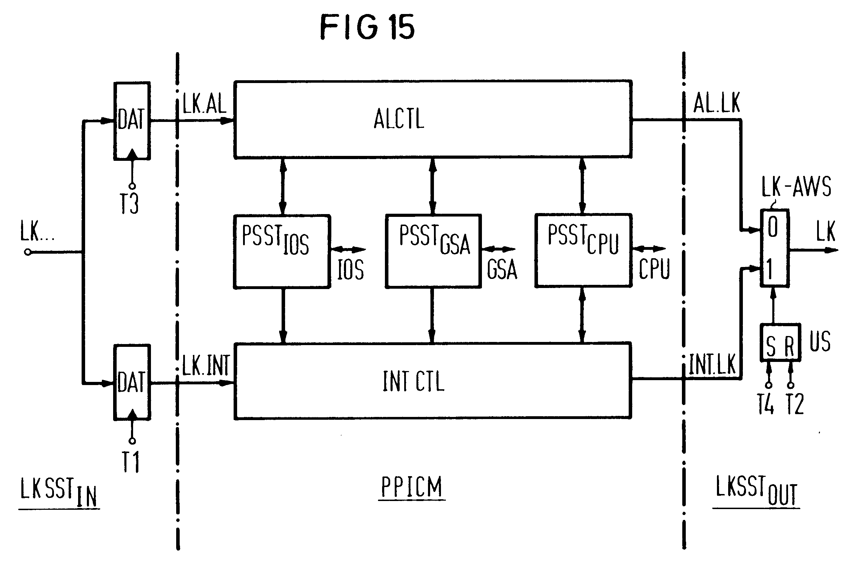

FIG 15 zeigt ein entsprechendes Übersichtsschaltbild eines Steuermoduls STM... mit getrennten Steuerschaltungen INTCTL und ALCTL für die Verarbeitung von Unterbrechungsanforderungen der Ein-/Ausgabeprozessoren und von gesonderten Meldeanforderungen für die Eintragungen in die globalen Register, wobei die Verbindungsleitungen für die Übertragung der beiden Arten von Anforderungen abwechselnd genutzt werden, d.h. daß im Rahmen eines für das Steuermodul vorgegebenen Arbeitszyklus jeweils eine Anforderung der einen Art und eine Anforderung der anderen Art entgegengenommen und weitergeleitet wird. So werden beispielsweise die für die abgehende Verbindungsleitung LK für die Weiterleitung zur Verfügung gestellten Anforderungen beider Steuerschaltungen ALCTL und INTCTL über den Auswahlschalter LK-AWS mit den Takten T2 und T4 für jeweils einen halben Arbeitszyklus wirksam geschaltet, wobei die Umsteuerung des Auswahlschalters durch einen beispielsweise als bistabile Kippstufe ausgebildeten Umschalter US erfolgt, der mit den Takten T4 jeweils gesetzt und mit den Takten T2 jeweils zurückgesetzt wird. Über die ankommende Verbindungsleitung LK eintreffende Anforderungen werden dagegen jeweils mit den Takten T1 für Unterbrechungsanforderungen und den Takten T3 für Meldeanforderungen in die Verarbeitung durch das Steuermodul eingeschleust, unabhängig davon, ob der Übertragungsverkehr auf der Ringverbindung asynchron oder synchron abläuft.

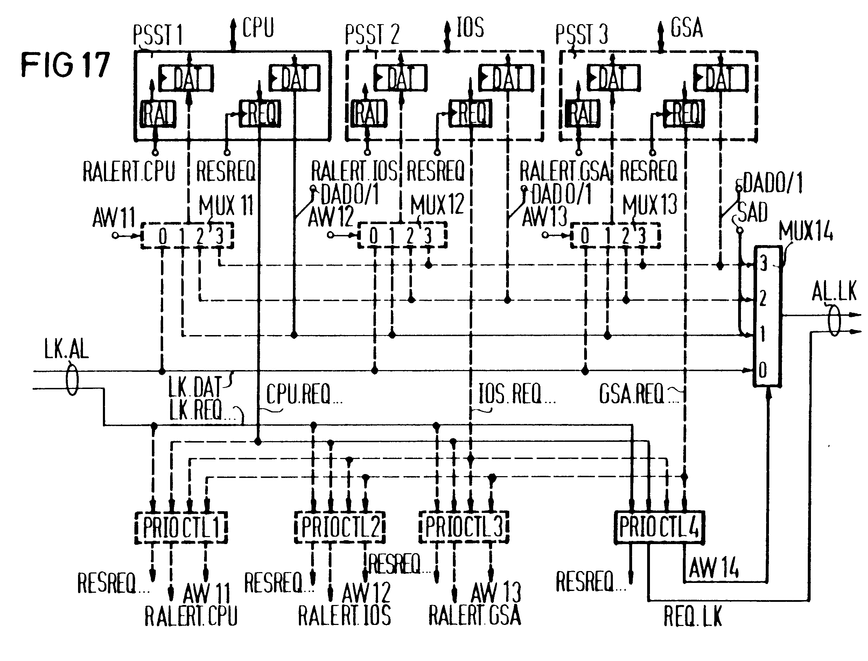

Das zugehörige Zeitdiagramm von FIG 16 veranschaulicht dieses Wechselspiel. Durch die Taktung am Eingang beider Steuerschaltungen mit den Takten T1 und T3 eines jeden Arbeitszyklus T_{ZYK} stehen die Anforderungen LK.INT bzw. LK.AL im Steuermodul jeweils für einen vollen Arbeitszyklus zur Verfügung. Während die weiterzuleitenden Anforderungen AL.LK bzw. INT.LK für die abgehende Verbindungsleitung LK jeweils nur für einen halben Arbeitszyklus wirksam geschaltet werden.

FIG 17 zeigt den zusätzlich zu FIG 13 erforderlichen Teil der Meldesteuerschaltung ALCTL für die Weiterleitung der über die ankommende Verbindungsleitung LK eintreffenden Meldeanforderungen LK.AL und der vom jeweiligen Verarbeitungsprozessor CPU gestellten Meldeanforderungen, wobei die gestrichelten Schaltungsteile erforderlich sind, wenn über die Meldesteuerschaltung ALCTL zusätzliche Meldungen zwischen allen Prozessoren eines Prozessorsystems austauschbar sein sollen, was in der europäischen Parallelanmeldung ........................ (GR 91 P 6059 E) näher beschrieben ist.

Zusätzlicher Mindestbestandteil ist daher eine Prioritätssteuereinheit PRIOCTL4 für die Auswahl der jeweils bevorrechtigten Meldeanforderung und ein dadurch einstellbarer Auswahlschalter MUX14 für die Durchschaltung der zugehörigen Meldedaten von der angeschlossenen Prozessorschnittstellensteuerung PSST.CPU oder der ankommenden Verbindungsleitung LK, wobei die Prioritätssteuerschaltung PRIOCTL4 in gleicher Weise ausgebildet sein kann wie die Steuerschaltung von FIG 13.

Soll über die Meldesteuerschaltung ALCTL auch zusätzlicher Meldeverkehr zwischen den einzelnen Prozessoren abgewickelt werden, dann ist für jede vorhandene Prozessorschnittstellensteuerung PSST... des Steuermoduls entsprechend den gestrichelten Schaltungsteilen eine weitere Prioritätssteuerschaltung PRIOCTL... mit zugehörigem Auswahlschalter MUX... zusätzlich erforderlich, wobei der Anforderungsdekoder REQ-DEC in jeder Prozessorschnittstellensteuerung PSST... individuelle Anforderungssignale x.REQ... für jedes mögliche Ziel erzeugt. Die zusätzlichen Meldeanforderungen werden gemäß FIG 7 den Prozessorschnittstellensteuerungen PSST... zweckmäßig durch ein gesondertes Anforderungssignal SALERT1 von den angeschlossenen Prozessoren gemeldet, wobei die Parameterbits PAR0 bis PAR7 in zwei Teile gegliedert sind, nämlich die Bits PAR0 bis PAR2 für die zu übertragenden Meldungen MSG und die Bits PAR3 bis PAR7 als Kennzeichen des jeweils anzusteuernden Prozessors oder einer vorgegebenen Gruppe von Prozessoren. Dazu ist das Kennzeichen RAD ebenfalls in zwei Teile gegliedert, wobei die Bits RAD0 und RAD1 mit den Bitgruppen "00", "01" und "10" eine Steuernachricht ALERT SEL für jeweils einen durch die Bits RAD2 bis RAD4 gekennzeichneten Prozessor CPUy bzw. IOSy bzw. GSAy und mit der Bitgruppe "11" eine Gruppensteuernachricht ALERT BC an eine oder mehrere ganze Gruppen von Prozessoren anzeigen.

Die mit SALERT2 ausgelöste Meldeanforderung zur Ändeurng der globalen Register GLR... entspricht in ihrer Wirkung der zusätzlichen Meldeanforderung mit SALERT1 für die Übertragung einer Gruppensteuernachricht entsprechend ALERT BC, wobei aber die Parameterbits PAR0 bis PAR7 ihre ursprüngliche Bedeutung zur Kennzeichnung der jeweiligen virtuellen Maschine MV... mit m0 bis m3, der jeweiligen Unterbrechungsklassengruppe mit ig und des Steuerbits mit ch behalten und eine solche Meldeanforderung sich immer nur an die Verarbeitungsprozessoren in den einzelnen Steuermodulen richtet.

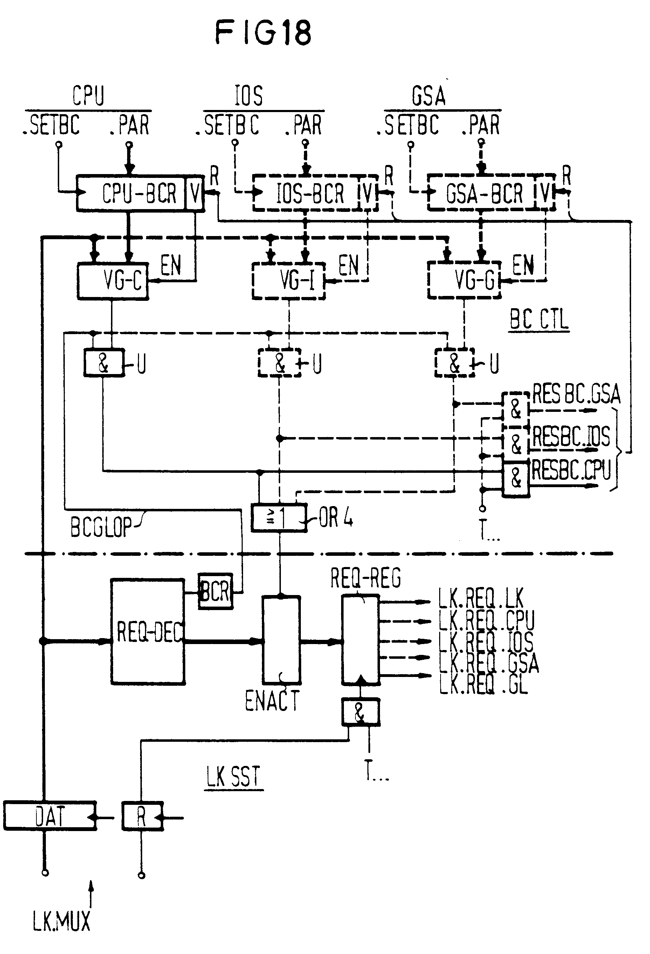

Um bei der Übertragung derartiger Gruppensteuernachrichten im sendenden Steuermodul erkennen zu können, ob eine solche Anforderung alle Steuermodule durchlaufen hat, ist in jedem Steuermodul mit der ankommenden Verbindungsleitung LK eine gesonderte Gruppensteuereinheit BCCTL gemäß FIG 18 zu koppeln, wobei die gestrichelten Schaltungsteile sich wiederum auf den zusätzlichen Meldeverkehr beziehen.

Wie bereits in FIG 6 dargestellt, liefert der Anforderungsdekoder REQ-DEC bei Erkennen der Anforderung für eine Gruppensteuernachricht entweder durch die Steuerbits CMD bei einer Anforderung mit SALERT2 oder bei zusätzlichem Meldeverkehr mit einer Anforderung durch SALERT1 durch die Parameterbits PAR3 und PAR4 ein zusätzliches prozessorbezogenes Steuersignal x.SETBC. Aufgrund des vom Verarbeitungsprozessor CPU ausgelösten Steuersignals CPU.SETBC wird das jeweils zugehörige Parameterwort in der Gruppensteuereinheit BCCTL in ein gesondertes Register CPU-BCR gespeichert und ein zugehöriges Gültigkeitsbit V gesetzt. Außerdem wird jede von der Ringverbindungsleitung ankommend bereitgestellte empfangene Steuernachricht bezüglich des mitgeführten Parameterwortes mit dem im Register CPU-BCR hinterlegten gültigen Parameterwort durch einen Vergleicher VG-C verglichen, der durch das zugehörige Gültigkeitsbit mit EN freigegeben ist.

Damit dieser Vergleich in jedem Steuermodul bezogen auf den jeweils sendenden Prozessor erfolgen kann, um festzustellen, daß eine Gruppensteuernachricht über alle Steuermodule hinweg übertragen worden ist, wird dem Parameterwort PAR gemäß FIG 7 der die Nachricht auslösenden lokalen Prozessoren jeweils noch eine Absenderidentifizierung, z.B. DAD0/1 in FIG 17, für die Aussendung über die jeweils abgehende Verbindungsleitung LK... zugesetzt.

Diese Absenderidentifizierung wird im Vergleicher VG-C ebenfalls überprüft. Hat weiterhin der Anforderungsdecoder REQ-DEC der Schnittstellensteuerung LKSST eine Gruppensteuernachricht erkannt, wird außerdem ein entsprechendes Steuersignal BCGLOP erzeugt, das das dem Ausgang des Vergleichers VG-C nachgeschaltete UND-Glied U freigibt, so daß über das ODER-Glied OR4 die Schaltergruppe ENACT gesperrt wird. Dadurch wird eine Übernahme der vom Anforderungsdecoder REQ-DEC abgeleiteten individuellen Anforderungssignale LK.REQ.LK und LK.REQ.GL in das Anforderungsregister REQ-REG verhindert und damit die Weiterleitung der Gruppensteuernachricht unterbunden. Außerdem wird mit dem vom UND-Glied U abgeleiteten Rücksetzsignal RESBC.CPU das entsprechende Gültigkeitsbit V wieder gelöscht und das Register BCR (FIG 6) in der zugehörigen lokalen Prozessorschnittstellensteuerung PSST wieder zurückgesetzt.

Wird die Meldesteuerschaltung ALCTL für zusätzlichen Meldeverkehr genutzt, bei dem die mit der Anforderung SALERT1 verbundenen Parameterbits PAR0 bis PAR7 gemäß FIG 7 maßgebend sind, sind entsprechend den gestrichelten Schaltungsteilen in FIG 18 auch für die übrigen Prozessoren IOS und GSA eines Steuermoduls individuelle Register ...-BCR mit nachgeschaltetem Vergleicher VG-I bzw. VG-G usw. vorzusehen. Zur Unterscheidung der auf eine Anforderung SALERT2 zurückgehenden Gruppensteuernachricht zur Änderung der globalen Register GLR... ist dann ein gesondertes Kennzeichen erforderlich, indem beispielsweise für die Absenderidentifizierung DAD0/1 eine gesonderte Bitkombination verwendet wird.

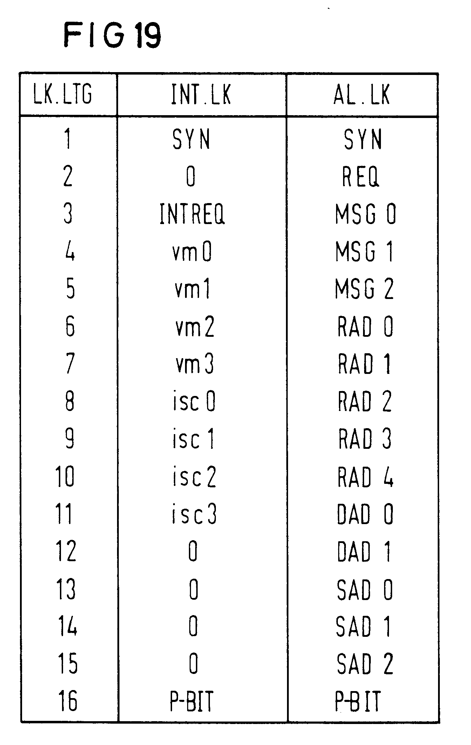

FIG 19 zeigt eine Zusammenstellung der für die Verbindungsleitung LK zwischen den einzelnen Steuermodulen STM... einer Ringverbindung benötigten Signaladern. Mit der Übertragung von Unterbrechungsanforderungen INT.LK sind dies eine Anforderungsleitung INTREQ und wenigstens vier Datenleitungen isc0 bis isc3 zur Kennzeichnung der jeweiligen Unterbrechungsklasse, zu denen vier weitere Datenleitungen vm0 bis vm3 zur Kennzeichnung der virtuellen Maschine VM... im virtuellen Maschinensystem hinzukommen können, sowie eine Datenleitung P für die Paritätssicherung. Zur Übertragung von Meldeanforderungen AL.LK durch die Meldesteuerschaltung ALCTL werden ebenfalls eine Anforderungsleitung REQ und wenigstens acht Datenleitungen für das Parameterwort entsprechend MSG0 bis MSG2 und RAD0 bis RAD4 sowie zwei Datenleitungen DAD0 und DAD1 für die Absenderidentifizierung und eine Datenleitung P für die Paritätssicherung benötigt. Weiterhin können Datenleitungen SAD0 bis SAD2 für die Kennzeichnung des die Steuernachricht veranlassenden Steuermoduls und damit des zuständigen Knotens vorgesehen sein, damit bei Multiprozessorsystemen mit zusätzlichem globalem Speicher, der über die Prozessoren GSA ansteuerbar ist, der globale Speicher die für die Datenübertragung benötigte Speicheradresse mit Bezug auf den anfordernden Verarbeitungsprozessor CPU ermitteln kann. Diese zusätzlichen Kennzeichnungen DA0... und SAD... werden in jedem Steuermodul dem von den Prozessorschnittstellensteuerungen gelieferten Parameterwort der lokalen Prozessoren zugefügt, wie FIG 17 zeigt.

Neben den genannten Signalleitungen werden weitere Signalleitungen für die Steuerung des Verbindungsverkehrs zwischen den einzelnen Steuermodulen einer Ringverbindung benötigt, was aber von der Art des gewählten Übertragungsverfahrens und der Arbeitsweise in den einzelnen Steuermodulen abhängig ist. Im vorliegenden Fall ist unterstellt, daß alle Steuermodule takt- und phasensynchron arbeiten, d.h. fortlaufend aus mehreren Phasentakten bestehende und in allen Modulen synchron ablaufende Arbeitszyklen durchlaufen werden, so daß nur eine Steuerleitung SYN zur Synchronisierung erforderlich ist.

Im übrigen kann die Zuordnung der benötigten Daten- und Steuerleitungen zu den einzelnen Signaladern LK.LTG der Verbindungsleitungen LK... beliebig sein, wie die Gegenüberstellung für den Unterbrechungsverkehr INT.LK und den Meldeverkehr AL.LK zeigt.

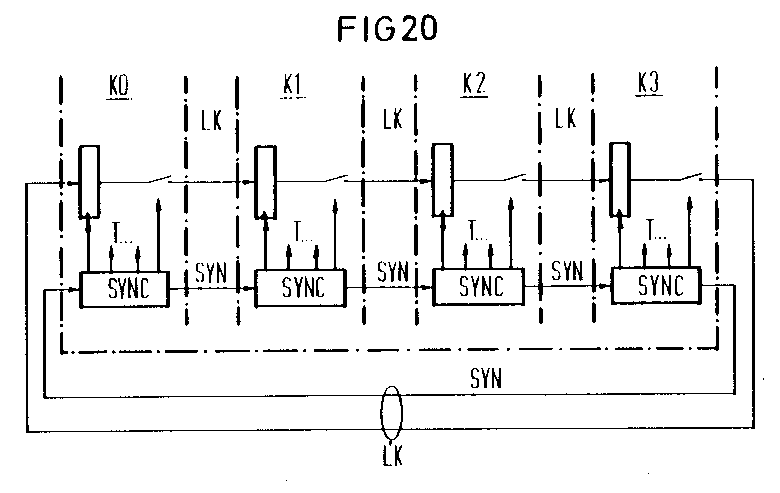

FIG 20 zeigt ein Strukturbild für die phasensynchrone Übertragung auf der Ringverbindung einer Unterbrechungssteuereinheit UB-ST. In jedem Steuermodul entsprechend den Knoten K0 bis K3 ist eine Synchronisiereinrichtung SYNC vorgesehen, die über die Signalleitung SYN phasensynchron arbeiten und beispielsweise jeweils vier Phasentakte T... erzeugen. Mit einem der Phasentakte werden jeweils Steuernachrichten vom vorgeschalteten Steuermodul in ein Register übernommen. Mit zwei weiteren Phasentakten erfolgt die Auswertung der Anforderungen und die Wegeauswahl und mit einem vierten Takt schließlich die Weiterleitung der Steuernachricht zum nächsten Steuermodul, so daß das dortige Register die Steuernachricht übernehmen kann. Da alle gleichartigen Register der Ringverbindung gleichzeitig mit der gleichen Taktflanke des gleichen Phasenimpulses geschaltet werden, können infolge der Verzögerungen auf den Verbindungsleitungen LK schaltzeitbedingte Verfälschungen der einzelnen Steuernachrichten bei der Übertragung nicht auftreten. Ein solches Taktschema ist beispielsweise dem Ablaufdiagramm von FIG 16 zugrundegelegt.

Eine solche synchrone Arbeitsweise aller Steuermodule einer Unterbrechungssteuerung ermöglicht den größten Datendurchsatz und erfordert den geringsten Aufwand an den Schnittstellen für die ankommende und abgehende Verbindungsleitung der einzelnen Steuermodule.

Selbstverständlich ist die modulartige Strukturierung der Unterbrechungssteuerung auch für einen asynchronen Übertragungsbetrieb geeignet. Doch erfordert ein solcher bekanntlich zusätzliche Pufferspeicher an den einzelnen Schnittstellen und zusätzliche Steuersignale auf den Verbindungsleitungen.

Ein asynchroner Betrieb ist dagegen für die einzelnen Prozessorschnittstellensteuerungen PSST... gemäß FIG 6 vorgesehen. Nach jeder von der Schnittstellensteuerung übernommenen Meldung in die Register PPIR und AL erhält der jeweils angeschlossene Prozessor Rücksignale, und zwar nach Prüfung durch die Kontrolleinrichtung CTL und der Paritätsprüfung mit PC entweder eine Fehlermeldung PERR oder eine Annahmemeldung PACC. Außerdem wird die Schnittstellensteurung durch ein Belegtsignal BUSY gegen weitere Anforderungen gesperrt, bis die mit der Anforderung verbundene Steuernachricht weitergeleitet und das Anforderungsregister REQ-REG wieder zurückgesetzt wird.

Für diese asynchrone Steuerungsweise ist aber beim Meldeverkehr folgende Besonderheit zu beachten: Wie bereits erwähnt, werden die von den einzelnen Schnittstellen vorliegenden Anforderungen für die abgehende Verbindungsleitung in Folge abgearbeitet und eine Anforderung bleibt solange bestehen, bis sie weitergeleitet ist. Hat die Anforderung dagegen das Steuermodul abgehend verlassen, kann sie nicht mehr aufgehalten oder verzögert werden. Um ihre Laufzeit zum Empfänger nicht unnötig zu verzögern, werden die ankommenden Verbindungsleitungen in allen Steuermodulen mit Vorrang vor den lokalen Anforderungen der Prozessoren behandelt. Die abgehende Verbindungsleitung ist daher immer dann für die Weiterleitung von lokalen Anforderungen gesperrt, wenn gleichzeitig eine Meldeanforderung auf der ankommenden Verbindungsleitung zur Weiterleitung über die abgehende Verbindungsleitung vorliegt. Aus diesem Grunde kann beim Zusammentreffen von ungünstigen Sender-/Empfängerbeziehungen, bei denen alle Steuernachrichten über die Ringverbindung zu übertragen sind, eine abgehende Verbindungsleitung beliebig lange gegenüber lokalen Anforderungen blockiert sein.

Um dies zu verhindern, werden die Belegtsignale BUSY bei Anforderung für die abgehendende Verbindungsleitung für eine vorgegebene Mindestdauer aufrechterhalten. Diese Mindestdauer ist abhängig von der Anzahl der an die Unterbrechungssteuereinheit angeschlossenen Prozessoren als Sender und der größtmöglichen Verarbeitungsdauer T_{Vmax} vom Eintreffen einer Steuernachricht über eine ankommende Verbindungsleitung bis zu deren Weiterleitung über die abgehende Verbindungsleitung. Um sicherzustellen, daß jeder von insgesamt n Prozessoren nacheinander wenigstens eine Anforderung absetzen kann, ist diese Mindestzeit wenigstens gleich (n+1) x T_{Vmax} oder bei synchroner Übertragungssteuerung für die Ringverbindung mit vorgegebenen Arbeitszyklen wenigstens gleich (n+1) Arbeitszyklen. Zur Vorgabe dieser Mindestdauer wird das Belegtsignal BUSY z.B. von einem auf die Mindestdauer einstellbaren Binärzähler B-CNT in Verbindung mit einer nachgeschalteten Steuereinrichtung B-CTL erzeugt. Dieser Zähler wird bei Annahme einer über die abgehende Verbindungsleitung weiterzuleitenden Anforderung jeweils auf den voreinstellbaren Wert, der vom Serviceprozessor SVP über das Modusregister MREG vorgegeben wird, gesetzt (Signal SETB-CNT) und durch ein periodisch wiederkehrendes Taktsignal T_{Zyk} schrittweise zurückgestellt. Bei Anforderungen für die abgehende Verbindungsleitung entfällt damit das Belegtsignal BUSY erst wieder, wenn der Zähler B-CNT die Nullstellung erreicht hat. Bei synchroner Übertragungssteuerung wird der Zähler B-CNT beispielsweise auf den Wert n+1 eingestellt und mit jedem Arbeitszyklus um einen Schritt zurückgesetzt. Handelt es sich dagegen um Anforderungen für lokale Prozessoren, wird der Zähler B-CNT dagegen nicht gesetzt, sondern mit dem Signal SETB an die Steuereinrichtung B-CTL das Signal BUSY ausgelöst, das dann vom entsprechenden Rücksetzsignal RESREQ.x über das ODER-Glied OR2 mit RESB unmittelbar wieder gelöscht wird. Die Schnittstelle wird also in diesem Fall sofort nach Weiterleitung der Steuernachricht für weitere Anforderungen wieder freigegeben.

Die neue Unterbrechungssteuerung UB-ST bringt weiterhin den großen Vorteil mit sich, daß auch bei laufendem Betrieb eines Prozessorsystems eine Rekonfiguration des Systems im Fehlerfall vorgenommen werden kann, ohne daß das Prozessorsystem vorher heruntergefahren werden muß. Nach der Rekonfigurierung kann es dann mit verminderter Leistung weiterarbeiten.

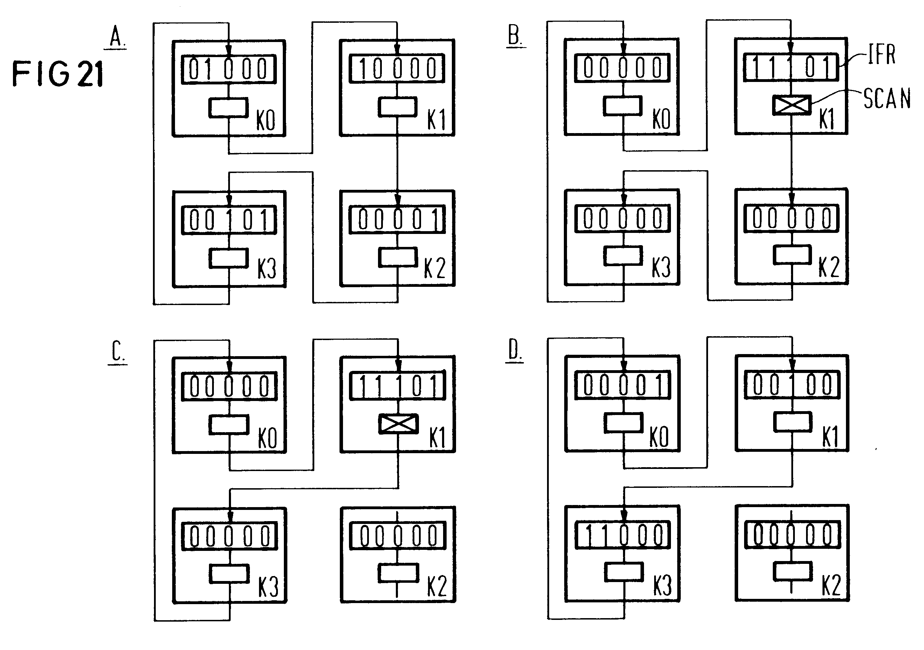

FIG 21 veranschaulicht den damit verbundenen Steuerungsablauf in vier Ablaufphasen A bis D. Gezeigt ist jeweils eine aus vier Steuermodulen bestehende Unterbrechungssteuerung für ein Multiprozessorsystem gemäß FIG 2, wobei jeweils ein Steuermodul jeweils einem der Prozessorknoten K0 bis K3 zugeordnet ist. Von jedem dieser Knoten ist lediglich das jeweilige Unterbrechungsanforderungsregister IFR und die Austragsauswahlsteuerung SCAN gezeigt. Angenommen sei dabei, daß der Knoten K2 der bestehenden Ringverbindung wegen eines Fehlerfalles aus dem System herausgenommen werden soll.

Dazu werden vom Serviceprozessor SVP zunächst alle Prozessoren in an sich bekannter Weise in den HALT-Zustand gebracht und in dem Steuermodul STM... am Knoten K1, das in der Ringverbindung vor dem herauszunehmenden Steuermodul am Knoten K2 liegt, wird die Auswahlsteuerung SCAN für das Entnehmen der im Unterbrechungsanforderungsregister IFR gespeicherten Unterbrechungsanforderungen angehalten, so daß keine Unterbrechungsanforderungen aus diesem Unterbrechungsanforderungsregister IFR mehr ausgetragen und weitergeleitet werden können. Das hat zur Folge, daß mit der Zeit alle entsprechend der Abbildung zur Ablaufphase A in den übrigen Unterbrechungsanforderungsregistern der übrigen Knoten K0, K2 und K3 eingetragenen Unterbrechungsanforderungen in das Unterbrechungsanforderungsregister IFR am Knoten K1 übertragen und dort gesammelt werden, wie die Darstellung entsprechend Ablaufphase B zeigt. Die Dauer dieses Vorganges beträgt bei acht Unterbrechungsklassen für die Ein-/Ausgabeprozessoren IOS und einer Unterbrechungsklasse für die Ein-/Ausgabeprozessoren GSA und synchroner Arbeitsweise aller n Steuermodule des Prozessorsystems etwa 9 x m x (n-1) x T_{ZYK} Arbeitszyklen bei m virtuellen Maschinen VM und m = 1 bei einem realen Maschinensystem.

Nach Sperrung der Taktversorgung an allen Knoten wird die Ringverbindung ohne den Knoten K2 über eine entsprechende Einstellung der einzelnen Modusregister MREG an den einzelnen Knoten rekonfiguriert, wie die Darstellung entsprechend der Ablaufphase C zeigt.

Sobald die neue Systemkonfiguration hergestellt ist, wird die Taktversorgung für alle Steuermodule wieder freigegeben und gegebenenfalls synchronisiert. Außerdem wird die Sperre für die Austragsauswahlsteuerungen SCAN in allen Steuermodulen und der HALT-Zustand der Prozessoren wieder aufgehoben. Die im Unterbrechungsanforderungsregister IFR am Knoten K1 aufgesammelten Unterbrechungsanforderungen verteilen sich daher wieder mit der Zeit auf die Unterbrechungsanforderungsregister IFR in den einzelnen Knoten, wie die der Ablaufphase D entsprechende Darstellung zeigt.

Das Anhalten und Freigeben der Austragsauswahlsteuerungen SCAN eines ausgewählten Steuermoduls STM kann in einfacher Weise, wie in FIG 11 gezeigt, durch Sperren bzw. Freigeben der UND-Glieder U22 und U24 durch ein gesondertes Sperrsignal IWR-HALT vom Serviceprozessor SVP gesteuert werden.

## Patentansprüche

1. Unterbrechungssteuerung zur Behandlung von Unterbrechungsanforderungen im Rahmen von Ein-/Ausgabeoperationen in Prozessorsystemen mit wenigstens einem Verarbeitungsprozessor (CPU) und wenigstens einem Ein-/Ausgabeprozessor (IOS), unter Verwendung von wenigstens einem Unterbrechungsanforderungsregister (IFR) zur Zwischenspeicherung der von den Ein-/Ausgabeprozessoren abgegebenen Unterbrechungsanforderungen (x.REQINT) bis zur Weiterleitung an den zuständigen Verarbeitungsprozessor (CPU) **dadurch gekennzeichnet**
- daß die Unterbrechungssteuerung (UB-ST) aus einzelnen Steuermodulen (STM...) mit jeweils wenigstens einer Prozessorschnittstelle (PSST...) für einen der Prozessoren (z.B. CPU oder IOS oder GSA) besteht,
- daß alle Steuermodule (STM...) über unidirektional arbeitende Verbindungsleitungen (LK) in Reihe geschaltet sind,
- daß in jedem Steuermodul (STM...) ein entsprechend den vorgesehenen Unterbrechungsklassen (z.B. ISC0 bis ISC7) unterteiltes Unterbrechungsanforderungsregister (IFR) vorgesehen ist,
- daß lokal in jedem Steuermodul (STM...) entstehende Unterbrechungsanforderungen (x.REQINT) zunächst im lokalen Unterbrechungsanforderungsregister (IFR) gespeichert werden und
- daß in den Unterbrechungsanforderungsregistern (IFR) gespeicherte Unterbrechungsanforderungen jeweils über die abgehende Verbindungsleitung zum Unterbrechungsanforderungsregister (IFR) des nachfolgenden Steuermoduls (STM) weitergeleitet werden, bis das für den als Empfänger bestimmten Verarbeitungsprozessor (CPU) zuständige Steuermodul (STM...) erreicht ist.

2. Unterbrechungssteuerung nach Anspruch 1,
**dadurch gekennzeichnet,** daß alle Steuermodule (STM...) über die Verbindungsleitungen (LK...) zu einer unidirektional arbeitenden Ringschaltung zusammengeschaltet sind.

3. Unterbrechungssteuerung nach Anspruch 2 für Prozessorsysteme, die durch Vervielfachung von Monoprozessorsystemen modulartig zu einem Multiprozessorsystem erweiterbar sind,
**dadurch gekennzeichnet,** daß für jedes Monoprozessorsystem ein Steuermodul (STM...) mit Prozessorschnittstellen (PSST...) für alle Prozessoren (z.B. CPU, IOS und GSA) des jeweiligen Monoprozessorsystems (K...) und mit einem für alle angeschlossenen Prozessoren gemeinsamen Unterbrechungsanforderungsregister (IFR) vorgesehen ist.

4. Unterbrechungssteuerung nach einem der Ansprüche 1 bis 3,
**dadurch gekennzeichnet,**
- daß die einzelnen Steuermodule (STM...) für die verschiedenen Prozessoren oder Monoprozessorsysteme (K...) über bidirektionale Verbindungsleitungen jeweils mit mehreren anderen Steuermodulen gekoppelt sind, von denen jeweils nur eine ankommende und eine abgehende Verbindungsleitung (LK...) zur Herstellung der Verbindung zwischen den Steuermodulen (STM...) genutzt wird und
- daß die Verbindungsleitungen (LK...) zwischen den einzelnen Steuermodulen (STM...) so angeordnet sind, daß bei Ausfall einer Verbindungsleitung oder eines Ein-/Ausgabeprozessors bzw. eines Monoprozessorsystems mit zugehörigem Steuermodul die gestörte ursprüngliche Verbindung zwischen den Steuermodulen durch eine alternative Verbindung oder durch eine Verbindung zwischen den restlichen Steuermodulen ersetzbar ist.

5. Unterbrechungssteuerung nach Anspruch 4,
**dadurch gekennzeichnet,** daß die jeweilige Verbindung zwischen den Steuermodulen (STM...) allein durch Wirksamschalten jeweils nur einer der ankommenden Verbindungsleitungen (LK...) in jedem Steuermodul (STM...) hergestellt wird, während über eine abgehende Verbindungsleitung weiterzuleitende Unterbrechungsanforderungen parallel auf alle vorhandenen abgehenden Verbindungsleitungen gegeben werden.

6. Unterbrechungssteuerung nach Anspruch 5,
**dadurch gekennzeichnet,** daß die Auswahl der jeweils wirksam zu schaltenden ankommenden Verbindungsleitung (LK...) abhängig von einem in jedem Steuermodul (STM...) vorhandenen und durch den Serviceprozessor (SVP) voreinstellbaren Steuerregister (MREG) erfolgt.

7. Unterbrechungssteuerung nach einem der Ansprüche 1 bis 6,
**dadurch gekennzeichnet,** daß in jedem Steuermodul (STM...) mit einer Prozessorschnittstellensteuerung (PSST.CPU) für einen Verarbeitungsprozessor (CPU) zusätzlich ein Unterbrechungsmaskenregister (ISCMR) vorgesehen ist, dessen Inhalt durch eine Unterbrechungsanforderung des Verarbeitungsprozessors (CPU) veränderbar ist und darüber entscheidet, ob eine im Unterbrechungsanforderungsregister (IFR) eingetragene Unterbrechungsanforderung über die Prozessorschnittstellensteuerung (PSST.CPU) dem Verarbeitungsprozessor (CPU) zugestellt werden kann oder nicht, und daß eine an den angeschlossenen Verarbeitungsprozessor (CPU) nicht weiterleitbare Unterbrechungsanforderung im Multiprozessorsystem zwangsläufig über die abgehende Verbindungsleitung (LK) an das nächste Steuermodul (STM...) in der Kette weitergeleitet wird, während im Monoprozessorsystem die Ansteuerung der abgehenden Verbindungsleitung (LK) über eine interne Verbindungsleitung (ILK) unmittelbar zum Wiedereintrag der Unterbrechungsanforderung ins lokale Unterbrechungsanforderungsregister (IFR) führt.

8. Unterbrechungssteuerung nach Anspruch 7 für Prozessorsysteme mit globalem Speicher (GSU), der über einen gesonderten Prozessor (GSA) mit dem gemeinsamen Speicher (MM) koppelbar ist, **dadurch gekennzeichnet,**
daß den Unterbrechungsanforderungen der gesonderten Prozessoren (GSA) eine gesonderte Unterbrechungsklasse (ISC8) mit höchster Priorität im Vergleich zu den übrigen Unterbrechungsklassen (ISC0 bis ISC7) für die Ein-/Ausgabeprozessoren (IOS) zugeordnet ist.

9. Unterbrechungssteuerung nach Anspruch 7 oder 8 in Verbindung mit einem der Ansprüche 3 bis 6 für virtuelle Maschinensysteme,
**dadurch gekennzeichnet,** daß in jedem Steuermodul (STM...) für jede der zulässigen virtuellen Maschinen (z.B. VM0 bis VM15) ein Unterbrechungsanforderungsregister (IFR0 bis IFR15) vorgesehen ist, und daß in jedem Steuermodul (STM...) mit einer Prozessorschnittstellensteuerung (PSST.CPU) für einen Verarbeitungsprozessor (CPU) neben dem Unterbrechungsmaskenregister (ISCMR) ein weiteres Maskenregister (VMIDCR) zur Kennzeichung der auf dem Verarbeitungsprozessor gerade laufenden virtuellen Maschine (VM...) vorgesehen ist, dessen Inhalt vom lokalen Verarbeitungsprozessor (CPU) durch eine entsprechende Unterbrechungsanforderung ebenfalls veränderbar ist und zusammen mit dem Inhalt des Unterbrechungsmaskenregisters (ISCMR) darüber entscheidet, ob eine in den Unterbrechungsanforderungsregistern (IFR...) eingetragene Unterbrechungsanforderung lokal an den angeschlossenen Verarbeitungsprozessor (CPU) zugestellt werden kann oder über die abgehende Verbindungsleitung (LK) zum nächsten Steuermodul (STM...) weiterzuleiten ist.

10. Unterbrechungssteuerung nach einem der Ansprüche 7 bis 9,
**dadurch gekennzeichnet,** daß auch eine von den Maskenregistern (VMIDCR und/oder ISCMR) freigegebene Zustellung einer Unterbrechungsanforderung an den lokal angeschlossenen Verarbeitungsprozessor (CPU) bei vorliegender Annahmesperre (Signal SINTREJ) für den Verarbeitungsprozessor wieder in das lokale Unterbrechungsanforderungsregister (IFR...) eingetragen wird (mit Signal REQ.REWR).

11. Unterbrechungssteuerung nach Anspruch 9 oder 10,
**dadurch gekennzeichnet**, daß in jedem Steuermodul (STM...) mit einer Prozessorschnittstellensteuerung (PSST.CPU) für einen Verarbeitungsprozessor (CPU) zusätzliche globale Register (GL...) vorgesehen sind, deren Inhalte kennzeichnen, ob dem jeweiligen Verarbeitungsprozessor auch Unterbrechungsanforderungen für eine abweichende virtuelle Maschine (VM...) als der gerade laufenden zugestellt werden können, und daß Änderungen der Inhalte dieser globalen Register (GLR...) durch entsprechende Anforderungen der einzelnen Verarbeitungsprozessoren (CPU) ausgelöst werden, die als Broadcast-Meldung auch an alle übrigen Steuermodule (STM...) einer Unterbrechungssteuerung (UB-ST) weitergeleitet werden, so daß die globalen Register (GLR...) aller Steuermodule (STM...) einer Unterbrechungssteuerung jeweils den selben Markierungsinhalt aufweisen.

12. Unterbrechungssteuerung nach Anspruch 11,
**dadurch gekennzeichnet,** daß die Unterbrechungsklassen (ISC0 bis ISC7) je virtueller Maschine (VM...) in Gruppen (z.B. ISC0 bis ISC3 und ISC4 bis ISC7) unterteilt sind und daß je Gruppe ein globales Register (GLR0 bzw. GLR1) mit je nur einem Markierungsbit für jede virtuelle Maschine (VM...) vorgesehen ist.

13. Unterbrechungssteuerung nach einem der Ansprüche 1 bis 12,
**dadurch gekennzeichnet,**
- daß das Vorliegen einer Unterbrechungsanforderung der Unterbrechungssteuerschaltung (INTCTL) im Steuermodul (STM...) von den angeschlossenen Sendequellen (LKSST, PSST...) in einheitlicher Weise durch ein Anforderungssignal (REQINT) in Verbindung mit den die Unterbrechungsklasse (ISC...) und gegebenenfalls die virtuelle Maschine (VM...) der Anforderung kennzeichnenden Daten (PAR) gemeldet wird,
- daß in einer Unterbrechungsverwaltungssteuerung (IFRCTL) von den jeweils zu einem vorgegebenen Zeitpunkt vorliegenden Anforderungen eine ausgewählt und anhand der zugehörigen Daten (PAR) ein entsprechender Eintrag im Unterbrechungsanforderungsregister (IFR...) erfolgt,
- daß anschließend aus dem bzw. den Unterbrechungsanforderungsregister(n) (IFR...) jeweils die Anforderung mit der höchsten Priorität ausgewählt und an eine Weiterleitungssteuerung (IRCTL) übergeben wird und
- daß anhand der vorliegenden Bezugsdaten (ISCM, VMID, GL...) durch ein logisches Verknüpfungsnetzwerk entschieden wird, ob die ausgewählte Unterbrechungsanforderung einem lokal angeschlossenen Verarbeitungsprozessor (CPU) zugestellt werden kann oder ob sie über die abgehende Verbindungsleitung (LK) zum nachfolgenden Steuermodul (STM...) weiterzuleiten ist, wobei das Auswählen einer Unterbrechungsanforderung mit Eintrag im Unterbrechungsanforderungsregister (IFR...), das Auswählen einer eingetragenen Unterbrechungsanforderung und deren Weiterleitung jeweils in einem sich fortlaufend wiederholenden Arbeitszyklus (T_{ZYK}) der Unterbrechungssteuerschaltung (INTCTL) erfolgt.

14. Unterbrechungssteuerung nach Anspruch 13,
**dadurch gekennzeichnet**, daß während eines jeden Arbeitszyklusses (T_{ZYK}) der Unterbrechungssteuerschaltung (INTCTL) jeweils eine Anforderung der ankommenden Verbindungsleitung (LK...) und eine der Anforderungen von den angeschlossenen Prozessoren bei gleichzeitig vorliegenden Unterbrechungsanforderungen ausgewählt und ins zuständige Unterbrechungsanforderungsregister (IFR...) eingetragen wird.

15. Unterbrechungssteuerung nach Anspruch 14,
**dadurch gekennzeichnet,** daß bei Monoprozessorsystemen mit nur einem angeschlossenen Prozessor (IOS oder GSA oder CPU) je Steuermodul (STM...) bei dem Steuermodul mit dem angeschlossenen Verarbeitungsprozessor (CPU) während eines jeden Arbeitszyklusses (T_{ZYK}) der Unterbrechungssteuerschaltung (INTCTL) jeweils eine Unterbrechungsanforderung der ankommenden Verbindungsleitung (LK) und eine Anforderung der internen Verbindungsleitung (ILK) bei gleichzeitig vorliegenden Unterbrechungsanforderungen ausgewählt und ins Unterbrechungsanforderungsregister (IFR...) eingetragen werden, während bei Monoprozessorsystemen mit nur einem Steuermodul für alle Prozessoren lediglich die interne Verbindungsleitung (ILK) statt der ankommenden Verbindungsleitung (LK) berücksichtigt wird.

16. Unterbrechungssteuerung nach einem der Ansprüche 13 bis 15,
**dadurch gekennzeichnet,** daß die Anforderungen (SALERT2) eines Verarbeitungsprozessors (CPU) zur Einstellung oder Änderung der Bezugsdaten (ISCM, VMID, GL...) für die Weiterleitungssteuerung (IRCTL) durch zusätzliche Steuerbits (CMD) gekennzeichnet werden, wobei daraus ableitbare Anforderungen (CPU.REQR) zum Wechsel der virtuellen Maschine (VM) und/oder der Unterbrechungsklassen (ISC...) abhängig von den Steuerbits (CMD) unmittelbar zur Auslösung eines Übernahmetaktes für das jeweils betroffene Register (VMIDCR oder ISCMR) in der Weiterleitungssteuerung (IRCTL) führen.

17. Unterbrechungssteuerung nach Anspruch 16,
**dadurch gekennzeichnet,** daß aus den von einem Verarbeitungsprozessor (CPU) bereitgestellten Steuerbits (CMD) ableitbare Anforderungen (CPU.REQGL) zur Änderung der globalen Register (GLR...) in den einzelnen Steuermodulen (STM...) zunächst einer gesonderten Meldesteuerschaltung (UPDCTL bzw. ALCTL) zugeleitet werden, der auch die über die ankommende Verbindungsleitung (LK) eintreffenden gleichartigen Anforderungen (LK.REQGL) zugeleitet werden, und daß in der Meldesteuerschaltung die jeweils bevorrechtigte der vorliegenden Anforderungen ausgewählt wird und einerseits für die Ansteuerung der lokalen globalen Register (GLR...) in der Weiterleitungssteuerung (IRCTL) zusammen mit den zugehörigen Daten (PAR0 bis PAR5) freigegeben und andererseits über die abgehende Verbindungsleitung (LK) zum nächstfolgenden Steuermodul (STM...) weitergeleitet wird, wobei der Anforderung über die ankommende Verbindungsleitung eine höhere Priorität zugeordnet ist.

18. Unterbrechungssteuerung nach Anspruch 17,
**dadurch gekennzeichnet,** daß für die Weiterleitung über die abgehende Verbindungsleitung (LK...) jeweils die für die Unterbrechungsanforderungen benutzten Signalleitungen der Verbindungsleitung verwendet werden, wobei Unterbrechungsanforderungen der Unterbrechungssteuerschaltung (INTCTL) und Anforderungen der gesonderten Meldesteuerschaltung (ALCTL) abwechselnd innerhalb eines Arbeitszyklusses (T_{ZYK}) über die abgehende Verbindungsleitung (LK) weitergeleitet werden.

19. Unterbrechungssteuerung nach Anspruch 17 oder 18,
**dadurch gekennzeichnet,**
- daß mit der Meldesteuerschaltung (ALCTL) eine gesonderte Überwachungsschaltung (BCCTL) gekoppelt ist,
- daß bei Vorliegen einer Anforderung zur Änderung der globalen Register (GLR...) in der Prozessorschnittstellensteuerung (PSST.CPU) für den Verarbeitungsprozessor (CPU) ein gesondertes Steuersignal (x.SETBC) erzeugt wird, das die Hinterlegung der zugehörigen Daten (PAR) zusammen mit einem Gültigkeitsbit (V) in einem zugehörigen Register (CPU-BCR) veranlaßt, und
- daß die Daten einer jeden über die Verbindungsleitung (LK) eintreffenden gleichartigen Anforderung mit den gespeicherten Daten verglichen und bei Übereinstimmung die Weiterleitung der Anforderung an die Unterbrechungssteuerschaltung (INTCTL) und die Meldesteuerschaltung (ALCTL) unterbunden und stattdessen das gesonderte Steuersignal (x.SETBC) der zugehörigen Prozessorschnittstellensteuerung (PSST.CPU) wieder abgeschaltet wird (mit Signal RESBC.x).

20. Unterbrechungssteuerung nach einem der Ansprüche 17 bis 19,
**dadurch gekennzeichnet**, daß durch die Meldesteuerschaltung (ALCTL) auf Anforderung der einzelnen Prozessorschnittstellensteuerungen (PSST...) auch weitere zwischen den einzelnen Prozessoren (CPU, IOS, GSA) eines Prozessorsystems auszutauschende Steuernachrichten adressengesteuert übertragen werden, wobei die Anforderungen zur Änderung der globalen Register (GLR...) durch eine gesonderte Information (DAD0/1=11) von den Anforderungen für die übrigen Steuernachrichten unterscheidbar ist.

21. Unterbrechungssteuerung nach einem der Ansprüche 13 bis 20,
**dadurch gekennzeichnet,** daß durch gekoppelte Synchronisierungseinrichtungen (SYNC...) in den einzelnen Steuermodulen (STM...) die Arbeitszyklen (T_{ZYK}) in allen Steuermodulen synchron ablaufen.

22. Unterbrechungssteuerung nach einem der Ansprüche 13 bis 21,
**dadurch gekennzeichnet,** daß von den Prozessorschnittstellensteuerungen (PSST...) jeweils nur eine Anforderung (SALERT1/2) vom jeweils angeschlossenen Prozessor entgegengenommen und die jeweilige Schnittstelle gegenüber dem Prozessor (z.B. CPU) solange als belegt gekennzeichnet wird (Signal BUSY), bis bei Anforderungen für die Unterbrechungssteuerschaltung (INTCTL) die Anforderung angenommen ist oder bis bei Anforderungen für die Meldesteuerschaltung (ALCTL) die mit der Anforderung verbundene Steuernachricht im Falle eines lokalen Empfängers (PSST...) an diesen weitergeleitet ist bzw. bis bei einer über die Verbindungsleitung (LK) weiterzuleitenden Steuernachricht eine vorgegebene Mindestdauer vergangen ist, die sicherstellt, daß alle Prozessoren der Unterbrechungssteuerung innerhalb dieser Zeitdauer wenigstens einmal eine Steuernachricht über die jeweils abgehende Verbindungsleitung des zugehörigen Steuermoduls absetzen können.

23. Unterbrechungssteuerung nach Anspruch 21 und 22,
**dadurch gekennzeichnet,** daß die Mindestzeitdauer bei insgesamt n Prozessoren (CPU, IOS, GSA) wenigstens (n+1) Arbeitszyklen entspricht.

24. Verfahren zur Behandlung der in den Unterbrechungsanforderungesregistern (IFR) einer Unterbrechungssteuerung (UB-ST) gemäß den Ansprüchen 1 bis 23 gespeicherten Unterbrechungsanforderungen bei einer Rekonfiguration des Prozessorsystems durch Herausnehmen eines Steuermoduls (STM...) mit angeschlossenem Ein-/Ausgabeprozessor oder Monoprozessorsystem,
**dadurch gekennzeichnet,**
- daß in dem letzten Steuermodul (STM...) vor dem jeweils herauszunehmenden Steuermodul die Entnahme von im Unterbrechungsanforderungsregister (IFR) eingetragenen Unterbrechungsanforderungen und deren Weiterleitung durch den Serviceprozessor (SVP) des Prozessorsystems gestoppt wird und dadurch alle in den Unterbrechungsanforderungsregistern (IFR...) der übrigen Steuermodule (STM...) eingetragenen Unterbrechungsanforderungen an das gegen Entnahme gesperrte Unterbrechungsanforderungsregister übertragen werden,
- daß anschließend alle Steuermodule (STM) phasengleich mit Ende des jeweiligen Arbeitszyklus (T_{ZYK}) vom Serviceprozessor (SVP) angehalten werden und die neue Konfiguration durch den Serviceprozessor hergestellt wird,
- daß danach alle Steuermodule (SMT...) durch den Serviceprozessor (SVP) wieder freigegeben werden und
- daß nach Freigabe aller Steuermodule schließlich die Entnahmesperre für das als Sammelbecken benutzte Unterbrechungsanforderungsregister (IFR...) wieder aufgehoben wird.
